(19) **Europäisches Patentamt / European Patent Office / Office européen des brevets**

(11) **EP 3 249 993 A1**

(12) # EUROPEAN PATENT APPLICATION
published in accordance with Art. 153(4) EPC

(43) Date of publication:
**29.11.2017 Bulletin 2017/48**

(21) Application number: **16740453.2**

(22) Date of filing: **25.01.2016**

(51) Int Cl.:
**H04W 74/00** (2009.01)   **H04W 74/08** (2009.01)
**H04W 48/08** (2009.01)   **H04W 72/12** (2009.01)
**H04L 5/00** (2006.01)

(86) International application number:
**PCT/KR2016/000776**

(87) International publication number:
**WO 2016/117981 (28.07.2016 Gazette 2016/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **23.01.2015 US 201562106974 P**
**27.03.2015 US 201562139347 P**

(71) Applicant: **Samsung Electronics Co., Ltd.**
**Gyeonggi-do 16677 (KR)**

(72) Inventors:
• **KIM, Dong-Han**
**Gyeonggi-do 16677 (KR)**
• **CHOI, Seung-Hoon**
**Gyeonggi-do 16677 (KR)**

• **KIM, Young-Bum**
**Gyeonggi-do 16677 (KR)**
• **KWAK, Yong-Jun**
**Gyeonggi-do 16677 (KR)**
• **KIM, Sang-Bum**
**Gyeonggi-do 16677 (KR)**
• **KIM, Soeng-Hun**
**Gyeonggi-do 16677 (KR)**
• **BAE, Tae-Han**
**Gyeonggi-do 16677 (KR)**
• **OH, Jin-Young**
**Gyeonggi-do 16677 (KR)**
• **RO, Sang-Min**
**Gyeonggi-do 16677 (KR)**

(74) Representative: **Gulde & Partner**
**Patent- und Rechtsanwaltskanzlei mbB**
**Wallstraße 58/59**
**10179 Berlin (DE)**

(54) **METHOD AND DEVICE FOR SUPPORTING DATA COMMUNICATION IN WIRELESS COMMUNICATION SYSTEM**

(57)    Disclosed is a 5G or pre-5G communication system for supporting a data transmission rate higher than that of a 4G communication system, such as LTE, and subsequent systems. Provided is a random access preamble transmitting method of a terminal for performing an initial access in a communication system, the method comprising the steps of: acquiring system information from a base station; determining a repetition level of a random access preamble by using the acquired system information; and transmitting the random access preamble with a repetitive frequency corresponding to the repetition level in a transmission resource area corresponding to the determined repetition level.

FIG.3

EP 3 249 993 A1

**Description**

**[Technical Field]**

The present disclosure relates to a cellular communication system, and particularly to a method for transmitting/receiving data by a user equipment (UE) for coverage enhancement. Further, the present disclosure relates to a method and apparatus for retransmitting data for a system operating in an unlicensed band. Further, the present disclosure relates to a method for transmitting/receiving data by a low-cost UE in a cellular wireless communication system.

**[Background Art]**

In order to satisfy demands for wireless data traffic that have been on an increasing trend since the commercialization of 4th generation (4G) communication systems, efforts are being made to develop an advanced 5th generation (5G) or pre-5G communication system. For this reason, the 5G or pre-5G communication system is called a beyond 4G network communication system or a post long term evolution (post LTE) system.

To achieve high data rates, the 5G communication system is considered to be implemented in an ultra-high frequency band (mmWave) (e.g., 60GHz band). For the 5G communication system, techniques including beamforming, massive multiple input multiple output (massive MIMO), full dimensional MIMO (FD-MIMO), array antenna, analog beamforming, and large-scale antenna are under discussion to mitigate path loss of radio waves and increase the reach of radio waves in the ultra-high frequency band.

Further, for the 5G communication system, techniques such as evolved small cell, advanced small cell, cloud radio access network (cloud RAN), ultra-dense network, device-to-device (D2D) communication, wireless backhaul, moving network, cooperative communication, coordinated multi-point (CoMP), and interference cancellation are being developed to provide an enhanced system network.

In addition, for the 5G communication system, advanced coding modulation (ACM) schemes including hybrid frequency shift keying (FSK) and quadrature amplitude modulation (QAM) (FQAM) and sliding window superposition coding (SWSC), and advanced access techniques including filter bank multi-carrier (FBMC), non-orthogonal multiple access (NOMA), and sparse code multiple access (SCMA) are under development. A wireless communication system has been developed from the initial wireless communication system providing voice-centric services to a broadband wireless communication system providing high speed and high quality packet data services, for example, the communication standards such as high speed packet access (HSPA) of 3rd generation partnership project (3GPP), long term evolution (LTE) or evolved universal terrestrial radio access (E-UTRA), high rate packet data (HRPD) of 3GPP2, ultra mobile broadband (UMB), and institute of electrical and electronics engineers (IEEE) 802.16e.

As a typical example of the broadband wireless communication system, the LTE system employs an orthogonal frequency division multiplexing (OFDM) scheme in a downlink and employs a single carrier-frequency division multiple access (SF-FDMA) scheme in an uplink. In general, the multiple access schemes as described above distinguish between data or control information for each user by allocating and operating time-frequency resources for carrying the data or control information for each user such that the resources do not overlap each other, that is, orthogonality is established between the resources.

An orthogonal frequency division multiplexing (OFDM) transmission scheme transmits data using a multi-carrier, and is a type of multi-carrier modulation (MCM) scheme in which serially input symbol strings are parallelized, the respective parallelized symbol strings are modulated with a plurality of multi-carriers, that is, a plurality of sub-carrier channels having orthogonality, and the modulated symbol strings are transmitted.

In the OFDM scheme, a modulation signal is located in a two-dimensional time-frequency resource. Resources on the time axis are divided into different OFDM symbols that are orthogonal to each other. Resources on the frequency axis are divided into different sub-carriers that are also orthogonal to each other. That is, in the OFDM scheme, one minimum resource can be indicated by assigning a particular OFDM symbol on the time axis and assigning a particular sub-carrier on the frequency axis, and this minimum unit resource is referred to as a resource element (RE). Since different REs have orthogonality even after passing through a frequency selective channel, signals carried by different REs can be received by a receiving end without causing interference to each other.

A physical channel is a channel in a physical layer, through which a modulation symbol obtained by modulating one or more encoded bit strings is transmitted. In an orthogonal frequency division multiple access (OFDMA) system, a plurality of physical channels may be transmitted depending on the use of a transmitted information sequence or a receiver. REs allocated to a physical channel to be transmitted should be prearranged between transmitting and receiving ends, and this arrangement is called "mapping".

A reference signal (RS) for allowing a UE to perform channel estimation is received from a base station and, for example, the RS signal employed in the LTE communication system includes a common reference signal (CRS) and a demodulation reference signal (DMRS) which is one of dedicated reference signals. The CRS is a reference signal transmitted over the entire downlink band, which all UEs can receive, and is used for channel estimation, feedback information configuration for a UE, or control channel and data channel demodulation. The DMRS is also a reference signal transmitted over the entire downlink band, and is used for data channel demodulation and channel estimation for a particular UE, but unlike the CRS, is not used for feedback information configuration. Therefore, the DMRS is transmitted through a PRB resource to be scheduled by a UE.

An uplink is largely divided into a physical uplink control channel (PUCCH) and a physical uplink shared channel (PUSCH), and a response channel to a downlink data channel and other feedback information are transmitted through the PUCCH when the PUSCH does not exist and transmitted through the PUSCH when the PUSCH exists.

The LTE system may use techniques such as adaptive and coding (AMC) and channel sensitive scheduling to improve transmission efficiency. With the use of the AMC, a transmitter can adjust the amount of transmission data depending on the channel state. That is, when the channel state is not good, the transmitter reduces the amount of transmission data so as to adjust the reception error probability to a desired level. In addition, when the channel state is good, the transmitter increases the amount of transmission data so as to efficiently transmit a large volume of information while adjusting the reception error probability to a desired level. With the use of resource management based on the channel sensitive scheduling, a transmitter selectively services the user having a better channel state among several users, and thus the wireless system capacity in a mobile communication system is increased compared to the case where a transmitter allocates a channel to one user and services the user using the allocated channel. Such an increase in the capacity is called "multi-user diversity gain". In short, the AMC and the channel sensitive scheduling are techniques for applying an appropriate modulation and coding scheme at the most efficient time determined on the basis of partial channel state information fed back from a receiver.

The AMC, when used with a system supporting multiple input multiple output (MIMO), may also include a function of determining the number or rank of spatial layers of a transmitted signal, and the like. In this case, when determining an optimum data rate, the AMC determines an optimum data rate by considering not only a coding rate and a modulating scheme, but also the number of layers required for data transmission using MIMO.

To support the AMC operation, a UE reports channel state information (CSI) to a base station. The UE measures the CSI by making reference to a reference signal (RS) transmitted by the base station. This reference signal may include a CRS or a channel status information reference signal (CSI-RS). Time-frequency resources to which the CRS and the CSI-RS are mapped and the formats of the CRS and the CSI-RS follow predefined configurations.

The CSI includes at least one of a channel quality indicator (CQI), a precoding matrix indicator (PMI), and a rank indicator (RI). The CQI indicates a signal to interference and noise ratio (SINR) for a wideband or subband. This CQI is generally represented in the form of a modulation and coding scheme (MCS) for satisfying predetermined data reception performance. The PMI provides precoding information required when a base station transmits data through multiple antennas in a system supporting MIMO. The RI provides rank information required when a base station transmits data through multiple antennas in a system supporting MIMO. The CSI is information that a UE provides to a base station in order to assist the base station in scheduling determination, but the values to be actually applied to data transmission by the base station, such as MCS, precoding, and rank, rely on the determination of the base station.

A UE may periodically transmit CSIs at regular time intervals by prearrangement with a base station, which is called "periodic CSI reporting". The base station previously notifies the UE of control information required for "periodic CSI reporting", for example, a CSI transmission period and CSI transmission resources, through signaling. In the case of "periodic CSI reporting", the UE basically transmits CSI through a physical uplink control channel (PUCCH) that is an uplink control channel. Exceptionally, when the UE should perform transmission over a physical uplink shared channel (PUSCH), which is a channel for uplink data transmission, at the time when CSI for "periodic CIS reporting" has to be transmitted, the UE multiplexes the CSI with the uplink data and transmits the multiplexed CSI and uplink data to the base station through the PUSCH.

Unlink "periodic CSI reporting" in which CSIs are periodically transmitted, the base station may request the UE to perform "aperiodic CSI reporting", if necessary. The base station notifies the UE of "aperiodic CSI reporting" through a control channel for scheduling uplink data of the UE. Upon receiving the request for "aperiodic CSI reporting", the UE performs CSI reporting to the base station through a physical uplink shared channel (PUSCH) that is a channel for uplink data transmission.

The LTE system employs a hybrid automatic repeat request (HARQ) scheme in which, when decoding of initially transmitted data is unsuccessful, the corresponding data is retransmitted in a physical layer. The HARQ scheme refers to a scheme in which, when a receiver fails to correctly decode data, the receiver transmits negative acknowledgement (NACK) informing a transmitter of the decoding failure, thereby allowing the transmitter to retransmit the corresponding data in a physical layer. The receiver enhances data reception performance by combining the data retransmitted by the transmitter with the existing data for which decoding has failed. Further, when the receiver correctly decodes data, the receiver transmits acknowledgement (ACK) informing the transmitter of the decoding success, thereby allowing the transmitter to transmit new data.

The control information such as an HARQ ACK/NACK and CSI fed back to a base station by a UE is called an uplink control information (UCI). In the LTE system, the UCI may be transmitted to a base station through a physical uplink control channel (PUCCH) that is an uplink control channel dedicated for control information, or may be transmitted through a physical uplink shared channel (PUSCH), which is a channel for uplink data transmission, while being multiplexed with data to be transmitted by a UE.

In an OFDM communication system, a downlink bandwidth includes a plurality of resource blocks (RBs), and each physical resource block (PRB) may include 12 subcarriers arranged along the frequency axis and 14 or 12 OFDM symbols arranged along the time axis. Here, the PRB is a basic unit for resource allocation.

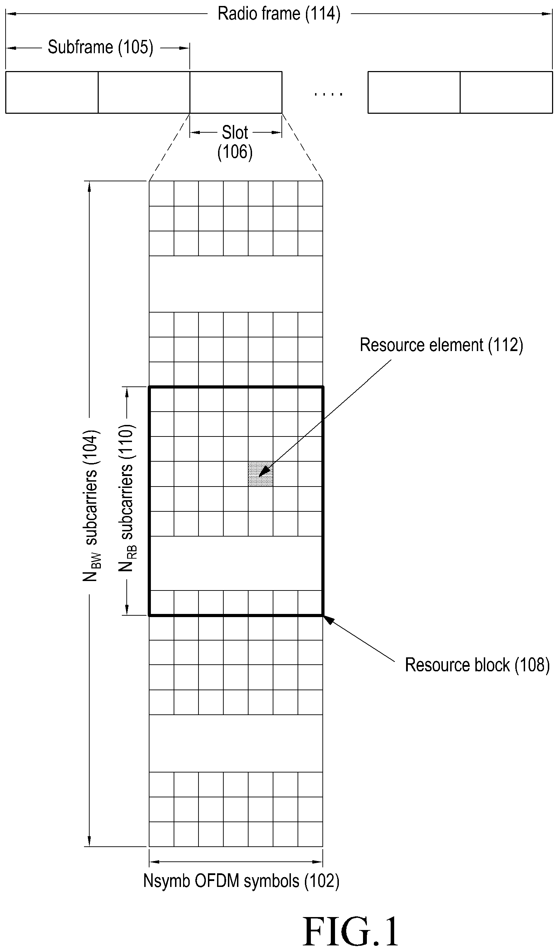

FIG. 1 illustrates a basic structure of the time-frequency domain that is a radio resource region where data or a control channel is transmitted in a downlink in the LTE system.

In FIG. 1, the abscissa axis represents the time domain and the ordinate axis represents the frequency domain. The minimum transmission unit in the time domain is an OFDM symbol, and $N_{symb}$ OFDM symbols 102 constitute one slot 106 and two slots constitute one subframe 105. The length of the slot is 0.5ms and the length of the subframe is 1.0ms. In addition, a radio frame 114 is a time domain unit including ten subframes. The minimum transmission unit in the frequency domain is a subcarrier and the entire system transmission band includes a total of $N_{BW}$ subcarriers 104.

The basic unit of resources in the time-frequency domain is a resource element (RE) 112 that may be indicated by an OFDM symbol index and a subcarrier index. A resource block (RB) or physical resource block (PRB) 108 is defined by $N_{symb}$ consecutive OFDM symbols 102 in the time domain and $N_{RB}$ consecutive subcarriers 110 in the frequency domain. Accordingly, one RB 108 includes $N_{symb}$ x $N_{RB}$ Res 112. In general, data is transmitted in units of RBs at the minimum. Generally, in the LTE system, $N_{symb}$ = 7 and $N_{RB}$ = 12, and $N_{BW}$ and $N_{RB}$ are proportional to the bandwidth of a transmission band. A data rate is increased in proportion to the number of RBs scheduled to a UE. The LTE system defines and operates six transmission bandwidths. In the FDD system which divides downlink and uplink channels by frequency, a downlink transmission bandwidth may be different from an uplink transmission bandwidth. A channel bandwidth indicates an RF bandwidth corresponding to a system transmission bandwidth.

Table 1 shows a correspondence between the channel bandwidth and the system transmission bandwidth defined in the LTE system. For example, in the LTE system having a channel bandwidth of 10MHz, the transmission bandwidth includes 50 RBs.

[Table 1]

| Channel bandwidth $BW_{Channel}$ [MHz] | 1.4 | 3 | 5 | 10 | 15 | 20 |
|---|---|---|---|---|---|---|
| Transmission bandwidth configuration $N_{RB}$ | 6 | 15 | 25 | 50 | 75 | 100 |

Uplink control information is transmitted within the first N OFDM symbols in a subframe. In general, N = {1, 2, 3}. Accordingly, for each frame, the value of N varies according to the amount of control information to be transmitted in the current subframe. The control information includes a control channel transmission interval indicator indicating the number of OFDM symbols over which the control information is transmitted, scheduling information for downlink data or uplink data, a HARQ ACK/NACK signal, and the like.

In the LTE system, scheduling information for downlink data or uplink data is transmitted from a base station to a UE through downlink control information (DCI). The uplink (UL) refers to a radio link through which a UE transmits data or a control signal to a base station, and the downlink (DL) refers to a radio link through which a base station transmits data or a control signal to a UE. The DCI defines various formats, and employs and operates a defined DCI format according to whether the DCI is scheduling information for uplink data (i.e., UL grant) or scheduling information for downlink data (i.e., DL grant), whether the DCI is a compact DCI including small-sized control information, whether spatial multiplexing using multiple antennas is applied, whether the DCI is a DCI for power control, and the like. For example, DCI format 1 that is scheduling control information for downlink data (DL grant) may be configured to include at least the following control information.

- Resource allocation type 0/1 flag: This notifies of whether a resource allocation scheme is type 0 or type 1. Type 0 applies a bitmap scheme so as to allocate resources in units of resource block groups (RBGs). In the LTE system, the basic unit of scheduling is a resource block (RB) represented by time-frequency domain resources, and an RBG includes a plurality of RBs and is used as the basic unit of scheduling in type 0. Type 1 is arranged to allocate a particular RB in an RBG.
- Resource block assignment: This notifies of an RB assigned for data transmission. Resources that represent an RB are determined according to the system bandwidth and the resource allocation scheme.
- Modulation and coding scheme (MCS): This notifies of a modulation scheme used for data transmission and the size of a transport block that is data to be transmitted.
- HARQ process number: This notifies the process number of HARQ.

- New data indicator: This notifies of whether HARQ transmission is HARQ initial transmission or retransmission.
- Redundancy version: This notifies of the redundancy version of HARQ.
- Transmit power control (TPC) command for physical uplink control channel (PUCCH): This notifies of a transmission power control command for a PUCCH that is an uplink control channel.

The DCI passes through a channel coding and modulation process and is then transmitted through a physical downlink control channel (PDCCH) or enhanced PDCCH (EPDCCH) that is a downlink control channel. The PDCCH that is a control channel region and the EPDCCH that is transmitted in a data channel region are separated and transmitted on the time axis. This is intended to quickly receive and demodulate a control channel signal.

In general, the DCI is independently subjected to channel coding for each UE, and then DCI including respective independent PDCCHs is transmitted. In the time domain, PDCCHs are mapped and transmitted during a control channel transmission interval. The mapping locations of the PDCCHs in the frequency domain are determined by the identifier (ID) of each UE, and are spread over the entire system transmission band. That is, one control channel is divided into sub-unit control channels that are located in a distributive manner over the entire downlink transmission band.

Downlink data is transmitted through a physical downlink shared channel (PDSCH) that is a physical channel for downlink data transmission. The PDSCH is transmitted after the control channel transmission interval, wherein scheduling information including a specific mapping location in the frequency domain and a modulation scheme is notified by DCI transmitted through the PDCCH.

A base station notifies a UE of a modulation scheme applied to a PDSCH to be transmitted and a transport block size (TBS) that is the size of data to be transmitted. The TBS corresponds to a size before channel coding for error correction is applied to data (i.e., transport block; TB) to be transmitted by a base station.

Modulation schemes supported in the LTE system include QPSK (quadrature phase shift keying), 16QAM (quadrature amplitude modulation), and 64QAM, the modulation orders ($Q_m$) of which correspond to 2, 4, and 6 respectively. That is, 2 bits per symbol can be transmitted for the QPSK modulation, 4 bits per symbol can be transmitted for the 16QAM modulation, and 6 bits per symbol can be transmitted for the 64QAM modulation.

A UE may complete synchronization with a base station using a primary synchronization signal (PSS) and a secondary synchronization signal (SSS) transmitted by the base station in an initial access process. Upon completing the synchronization with the base station, the UE acquires information required for future communications with the base station by receiving a master information block (MIB) and a system information block (SIB) transmitted by the base station. Since the base station is not aware of the existence of the UE until this stage, the UE subsequently accesses the base station by performing a random access procedure with the base station.

In the LTE system that is operated as described above, a low-cost UE or a low-complexity UE can be supported through restrictions on some functions of a UE. The low-cost UE is expected to be suitable for a machine type communication (MTC) or machine to machine (M2M) service chiefly aimed at services such as remote metering, crime prevention, and logistics. Further, the low-cost UE is promising as a means for implementing cellular-based Internet of things (IoT).

To achieve low cost and low complexity, the cost of RF components of a UE may be reduced by limiting the number of reception antennas of the UE to one, or the cost of the data reception soft buffer of a UE may be reduced by setting an upper limit for TBS that can be processed by a low-cost UE. In addition, while a normal LTE UE has a broadband signal transmission/reception function for a band of at least 20MHz regardless of the bandwidth of a system transmission band, a low-cost UE may implement low cost and low complexity by limiting the maximum bandwidth to less than 20MHz. For example, in the LTE system having a channel bandwidth of 20MHz, the operation of a low cost UE may be defined so as to support only a channel bandwidth of 1.4MHz.

A low-cost UE has low mobility according to an MTC/M2M service or an IoT service, but may be located in a shadow area of a building that is out of a person's reach. Accordingly, there is a need for a method for coverage enhancement.

In 3GPP LTE rel-10, a method has been adopted to increase the number of cells accessed by a UE, wherein feedback occurring in each cell is transmitted only in a primary cell (Pcell). Further, in LTE Rel-10, all extended cells for a UE have the same duplex structure. Accordingly, all the cells may have a frequency division duplex (FDD) structure, and may also have a time division duplex (TDD) structure. The TDD structure may be a static TDD structure in which UL-DL configurations are maintained, and may also be a dynamic TDD structure in which UL-DL configurations are changed by system information, a higher layer signal, or a downlink common control channel.

In LTE Rel-12, a UE is allowed to simultaneously access a macro base station and a small-sized base station connected to a non-ideal backhaul, wherein the UE adopts a method in which feedback occurring in a cell within each base station is independently transmitted through a Pcell in the macro base station and a primary Scell (PS) cell in the small-sized base station. Unless indicated otherwise, the term "Pcell" in the present disclosure collectively refers to a Pcell in a macro base station or a PS cell in a small-sized base station. Therefore, the term "Scell" in the present disclosure refers to the other cells except for a Pcell in a macro base station or the other cells except for a PS cell in a small-sized base station.

If one cell controlled by a base station has an FDD structure and a single frequency band is added, the single frequency band is easy to apply a TDD structure. This is because two different frequency bands between a downlink and an uplink are required to operate an FDD structure.

Further, in consideration of the limited number of licensed bands such as the LTE frequency (unless indicated otherwise, LTE includes all types of evolved technologies of LTE, such as LTE-A), provisioning of LTE services in an unlicensed band such as a 5GHz band is under discussion, and this process is called a licensed assisted access (LAA). An approach is being considered, in which, when the LAA is introduced, the LTE cell, which is a licensed band, is operated as a Pcell, and the LAA cell, which is an unlicensed band, is operated as an Scell. Here, as in LTE-A, feedback occurring in the LAA cell as an Scell is transmitted only in a Pcell, and both the FDD and TDD structure may be applied to the LAA cell.

The unlicensed band of 5GHz is a band that is currently operated by the Wi-Fi system. In order to allow the LAA to use the unlicensed band of 5GHz, the LAA should be designed to have no effect on the existing Wi-Fi system that currently operates the 5GHz band, and like the Wi-Fi system, the LAA system can occupy a specific channel of the unlicensed band only in a partial time. The LAA system cannot transmit data over a specific channel until it is confirmed through sensing of the specific channel that the specific channel is already occupied by any other system (Wi-Fi or another LAA system). In the present disclosure, the maximum time for which the LAA cell can occupy a specific channel of an unlicensed band may be referred to as the max. occupancy time, and the time for which the LAA cell does not occupy the specific channel and performs sensing or stands by in an idle state may be referred to as an idle time.

Here, if there is data that a base station or UE has not completely transmitted during the max. occupancy time in the LAA cell, then it is impossible to transmit the data during the idle time in the LAA cell. Accordingly, the data transmission should be delayed until a next time when the base station or UE can occupy the channel, but data transmission capacity may decrease as the delayed time increases. Therefore, there is a need for a way to reduce a decrease in data transmission capacity due to a delayed time in the LAA cell and to perform data retransmission.

Further, since a low-cost UE supports only a partial subband in the entire channel bandwidth, there is a need to define transmission and reception operations that are differentiated from those of a typical LTE UE.

**[Disclosure]**

**[Technical Problem]**

The present disclosure provides a method for determining the repetition level of a random access preamble and a random access response for coverage enhancement in an initial access process by a UE requiring coverage enhancement, and a specific method for signaling the required repetition level for coverage enhancement to a base station by the UE.

The present disclosure provides a random access method for performing initial access by a UE required to repeat a physical channel for coverage enhancement.

The present disclosure provides a method for solving a reduction in data transmission capacity, caused by an idle time in an LAA cell.

The present disclosure provides a method for retransmitting data that is not completely transmitted during a max. occupancy time in an LAA cell.

The present disclosure provides a specific method for operating both a normal LTE UE and a low-cost UE in the same system.

The present disclosure provides a method for feeding back channel state information of a low-cost UE that supports only a smaller bandwidth than a system transmission bandwidth.

**[Technical Solution]**

The present disclosure proposes a method for transmitting a random access preamble by a user equipment (UE) performing initial access in a communication system, the method including: acquiring system information from a base station; determining a repetition level of a random access preamble using the acquired system information; and repeatedly transmitting the random access preamble a number of times corresponding to the determined repetition level in a transmission resource region corresponding to the repetition level. Alternatively, the method may further include: receiving a reference signal; and measuring reference signal received power (RSRP) of the received reference signal, wherein the repetition level of the random access preamble is determined by comparing the measured RSRP with the system information. Alternatively, the method may further include performing synchronization by receiving as many downlink synchronization signals as the accumulated number of receptions, wherein the repetition level of the random access preamble is determined by comparing the accumulated number of receptions with the system information. Alternatively, the method may further include acquiring a master information block (MIB) by receiving as many physical broadcast channels (PBCHs) as the accumulated number of receptions, wherein the repetition level of the random access preamble is determined by comparing the accumulated number of receptions with the system information. Alternatively, the system information may be acquired by receiving as many physical downlink control channels (PDCCHs) and physical downlink shared channels (PDSHs) as the accumulated number of receptions, wherein the repetition level of the random access preamble is determined by comparing the accumulated number of receptions with the system information. Alternatively, the method may further include calculating transmission power required to detect the random access preamble by the base station and maximum transmission power allowed for the UE, wherein the repetition level of the random access preamble is determined by comparing a difference between the required transmission power and the maximum transmission power with the system information. Alternatively, the method may further include: determining a repetition level of a downlink random access response (RAR); determining a random access preamble sequence group on the basis of the determined repetition level of the RAR; and determining a random access preamble sequence in the determined sequence group, wherein the random access preamble is generated using the random access preamble sequence. Alternatively, the method may further include receiving an RAR on the basis of the determined repetition level of the RAR. Alternatively, the method may further include: receiving an RAR; extracting a transmission power control (TPC) field included in the RAR; determining an msg3 repetition level from the extracted TPC field; and repeatedly transmitting msg3 on the basis of the determined mas3 repetition level.

The present disclosure proposes a user equipment (UE) apparatus for performing initial access in a communication system, the UE apparatus including: a transceiver unit for acquiring system information from a base station; and a control unit for determining a repetition level of a random access preamble using the acquired system information, and repeatedly transmitting the random access preamble a number of times corresponding to the determined repetition level in a transmission resource region corresponding to the repetition level.

The present disclosure proposes a method for performing downlink data communication by a user equipment (UE) operating in a long term evolution (LTE) cell within a licensed band and in a license assisted access (LAA) cell within an unlicensed band, the method including: receiving configuration information for the LTE cell and the LAA cell; checking whether subframe #n of the LAA cell falls within an idle time, using the configuration information; when subframe #n of the LAA cell falls within the idle time, receiving a control channel for downlink data scheduling and downlink data in subframe #n of the LTE cell; and transmitting hybrid automatic repeat request-acknowledgement (HARQ-ACK) in a subframe after a certain number of subframes from subframe #n of the LTE cell. Alternatively, the LAA cell may be scheduled by the LTE cell, and the control channel for downlink data scheduling may be transmitted through a UE specific search space that is identified by a serving cell index of the LAA cell or a carrier indicator field (CIF). Alternatively, the LAA cell may be scheduled by the LTE cell, and a search space for the control channel for downlink data scheduling and a search space for a control channel for downlink data scheduling in the LTE cell are identified by a carrier indicator field (CIF) value.

The present disclosure proposes a method for performing downlink data communication by a base station operating in a long term evolution (LTE) cell within a licensed band and in a license assisted access (LAA) cell within an unlicensed band, the method including: transmitting configuration information for the LTE cell and the LAA cell; checking whether subframe #n of the LAA cell falls within an idle time, using the configuration information; when subframe #n of the LAA cell falls within the idle time, transmitting a control channel for downlink data scheduling and downlink data in subframe #n of the LTE cell; and receiving hybrid automatic repeat request-acknowledgement (HARQ-ACK) in a subframe after a certain number of subframes from subframe #n of the LTE cell.

The present disclosure proposes a user equipment (UE) apparatus operating in a long term evolution (LTE) cell within a licensed band and in a license assisted access (LAA) cell within an unlicensed band, the UE apparatus including: a transceiver unit for receiving configuration information for the LTE cell and the LAA cell; and a control unit for checking whether subframe #n of the LAA cell falls within an idle time, using the configuration information, receiving a control channel for downlink data scheduling and downlink data in subframe #n of the LTE cell when subframe #n of the LAA cell falls within the idle time, and transmitting hybrid automatic repeat request-acknowledgement (HARQ-ACK) in a subframe after a certain number of subframes from subframe #n of the LTE cell.

The present disclosure proposes a base station apparatus operating in a long term evolution (LTE) cell within a licensed band and in a license assisted access (LAA) cell within an unlicensed band, the base station apparatus including: a transceiver unit for transmitting configuration information for the LTE cell and the LAA cell; and a control unit for checking whether subframe #n of the LAA cell falls within an idle time, using the configuration information, transmitting a control channel for downlink data scheduling and downlink data in subframe #n of the LTE cell when subframe #n of the LAA cell falls within the idle time, and receiving hybrid automatic repeat request-acknowledgement (HARQ-ACK) in a subframe after a certain number of subframes from subframe #n of the LTE cell. Alternatively, the configuration information for at least one subband may include at least one of information indicating the location of the at least one subband, information indicating the number of the at least one subband, and information indicating for which subband the UE should perform channel state information (CSI) reporting. Alternatively, information related to the CSI reporting may include at least one of information indicating a CSI reporting period, information indicating a CSI reporting point, and information indicating whether the CSI is wideband CSI or subband CSI.

The present disclosure proposes a method for receiving a channel state information (CSI) by a base station that supports at least one subband constituting a system transmission bandwidth, the method including: transmitting configuration information for subbands; transmitting information related to CSI reporting; receiving CSI of at least one subband indicated by the configuration information for subbands from a user equipment (UE), on the basis of the information related to CSI reporting; and scheduling the UE using the received CSI. Alternatively, the method may further include: checking whether the received CSI is CSI of a low-cost UE; and when the received CSI is CSI of a low-cost UE, recognizing a measurement bandwidth of the CSI as a subband where the low-cost UE operates.

The present disclosure proposes a user equipment (UE) apparatus operating in at least one subband constituting a system transmission bandwidth, the UE apparatus including: a transceiver unit for receiving configuration for subbands and receiving information related to channel state information (CSI) reporting; and a control unit for measuring CSI of at least one subband indicated by the configuration information for subbands, on the basis of the information related to CSI reporting, and reporting the measured CSI of the at least one subband.

The present disclosure proposes a base station apparatus that supports at least one subband constituting a system transmission bandwidth, the base station apparatus including: a transceiver unit for transmitting configuration for subbands and transmitting information related to channel state information (CSI) reporting; and a control unit for receiving CSI of at least one subband indicated by the configuration information for subbands from a user equipment (UE), on the basis of the information related to CSI reporting, and scheduling the UE using the received CSI.

## [Advantageous Effects]

The present disclosure can provide a method for initial access of a UE requiring coverage enhancement, thereby allowing a low-cost UE requiring coverage enhancement and a conventional UE to efficiently perform random access with a base station.

According to the present disclosure, data that has not been successfully received during a max. occupancy time in an LAA cell using an unlicensed band can be retransmitted in an LTE cell using a licensed band, and thus the maximum transmission rate can be increased.

The present disclosure can provide a method for feeding back channel state information of a low-cost UE, thereby supporting a base station scheduling operation for the low-cost UE and allowing a conventional UE and the low-cost UE to efficiently coexist in the system.

## [Brief Description of Drawings]

FIG. 1 is a view illustrating a basic structure of the time-frequency domain that is a radio resource region where data or a control channel is transmitted in a downlink in the LTE system;

FIG. 2 is a view for explaining a procedure of acquiring system information from a base station and performing access by a UE that performs an initial access process in the LTE system;

FIG. 3 is a flowchart illustrating a method of determining the coverage enhancement mode or repetition level of a random access preamble on the basis of downlink measurement and transmitting the random access preamble by a UE according to alternative 1-1 of a first embodiment of the present disclosure;

FIG. 4 is a flowchart illustrating a method of determining the coverage enhancement mode or repetition level of a random access preamble according to the repetitive reception level of a downlink synchronization channel and transmitting the random access preamble by a UE according to alternative 1-2 of the first embodiment of the present disclosure;

FIG. 5 is a flowchart illustrating a method of determining the coverage enhancement mode or repetition level of a random access preamble using the repetitive reception level of a downlink broadcast channel and transmitting the random access preamble by a UE according to alternative 1-3 of the first embodiment of the present disclosure;

FIG. 6 is a flowchart illustrating a method of determining the coverage enhancement mode or repetition level of a random access preamble using the repetitive reception level (repetition level of a reception operation) of a physical downlink control channel or physical downlink shared channel for downlink data reception and transmitting the random access preamble by a UE according to alternative 1-4 of the first embodiment of the present disclosure;

FIG. 7 is a graph illustrating a conceptual comparison between a case of requiring coverage enhancement and a case of requiring no coverage enhancement on the basis of the calculated transmission power of a random access preamble according to the present disclosure;

FIG. 8 is a flowchart illustrating a method of determining the coverage enhancement mode or repetition level of a random access preamble on the basis of a random access preamble power control method and transmitting the random access preamble by a UE according to alternative 1-5 of the first embodiment of the present disclosure;

FIG. 9 is a flowchart illustrating a method of determining a downlink repetition level for receiving an RAR and reporting the determined downlink repetition level to a base station by a UE according to alternative 2-3 of a second embodiment of the present disclosure;

FIG. 10 is a flowchart illustrating a method of determining the repetition level of a PUSCH for msg3 transmission using an RAR, which a base station transmits, by a UE according to alternative 3-1 of a third embodiment of the present disclosure;

FIG. 11 is a block diagram illustrating a configuration of a UE apparatus according to some embodiments of the present disclosure;

FIG. 12 is a block diagram illustrating a configuration of a base station apparatus according to some embodiments of the present disclosure;

FIG. 13A is a view illustrating a communication system to which the present disclosure is applied;

FIG. 13B is a view illustrating a communication system to which the present disclosure is applied;

FIG. 14 is a view illustrating a downlink data retransmission scenario to be solved in the present disclosure;

FIG. 15 is a view illustrating a downlink data retransmission method according to a fourth embodiment of the present disclosure;

FIG. 16A is a flowchart illustrating an operation of a base station for a downlink data retransmission method according to the fourth embodiment of the present disclosure;

FIG. 16B is a flowchart illustrating an operation of a UE for a downlink data retransmission method according to the fourth embodiment of the present disclosure;

FIG. 17 is a view illustrating a downlink data retransmission method according to a fifth embodiment of the present disclosure;

FIG. 18A is a flowchart illustrating an operation of a base station for a downlink data retransmission method according to the fifth embodiment of the present disclosure;

FIG. 18B is a flowchart illustrating an operation of a UE for a downlink data retransmission method according to the fifth embodiment of the present disclosure;

FIG. 19 is a block diagram illustrating a configuration of a base station apparatus according to some embodiments of the present disclosure;

FIG. 20 is a block diagram illustrating a configuration of a UE apparatus according to some embodiments of the present disclosure;

FIG. 21 is a conceptual view illustrating measurement bandwidths for wideband CSI and subband CSI;

FIG. 22 is a conceptual view illustrating a CSI reporting method when configuring and operating one subband where a low-cost UE operates within a system transmission bandwidth according to a sixth embodiment of the present disclosure;

FIG. 23 is a conceptual view illustrating a CSI reporting method when configuring and operating a plurality of subbands in which a low-cost UE operates within a system transmission bandwidth according to the sixth embodiment of the present disclosure;

FIG. 24 is a flowchart illustrating a CSI reporting procedure of a low-cost UE according to the sixth embodiment of the present disclosure;

FIG. 25 is a flowchart illustrating a CSI acquisition procedure of a base station according to the sixth embodiment of the present disclosure;

FIG. 26 is a flowchart illustrating a method of processing CSI reporting received by a base station in the sixth embodiment of the present disclosure;

FIG. 27 is a conceptual view illustrating a CSI reporting method when a base station operates a subband where a low-cost UE operates within a system transmission bandwidth without explicitly configuring the subband according to a seventh embodiment of the present disclosure;

FIG. 28 is a view illustrating a case where a subband size k determined by a system transmission bandwidth is different from the size of a low-cost subband 2804 according to the seventh embodiment of the present disclosure;

FIG. 29 is a flowchart illustrating a CSI reporting procedure of a low-cost UE according to the seventh embodiment of the present disclosure;

FIG. 30 is a flowchart illustrating a CSI reporting acquisition procedure of a base station according to the seventh embodiment of the present disclosure;

FIG. 31 is a block diagram illustrating a configuration of a base station apparatus according to some embodiments of the present disclosure; and

FIG. 32 is a block diagram illustrating a configuration of a UE apparatus according to some embodiments of the present disclosure.

**[Mode for Invention]**

Hereinafter, embodiments of the present disclosure will be described in detail with reference to the accompanying drawings. In the following description of the present disclosure, a detailed description of known configurations or functions incorporated herein will be omitted when it is determined that the detailed description may make the subject matter of the present disclosure unnecessarily unclear. In addition, the terms as described below are defined in consideration of the functions in the present invention and therefore may vary according to the intentions of users or operators, or practices. Accordingly, the definitions of them should be made on the basis of the overall context of the invention.

In the following description, the present disclosure is directed to the long term evolution (LTE) system and the LTE-advanced (LTE-A) system by way of example, but the present disclosure may be applied to any other communication system employing base station scheduling without making a special change thereto. Further, in some embodiments of the present disclosure, the advanced E-UTRA (or also referred to as LTE-A) system supporting carrier aggregation (CA) will be discussed by way of example, but the main idea of the present disclosure may be applied to any other communication system having a similar technical background or channel format through some modifications that can be made by the determination of a person skilled in the art without significantly departing from the scope of the present disclosure. For example, the main idea of the present disclosure may be applied to multicarrier HSPA supporting CA.

Before the detailed description of the present disclosure, an example of how to interpret the meaning of several terms used herein will be given. However, it should be noted that the terms are not limited to the example given below.

A base station is an entity that communicates with a user equipment, and may also be referred to as a BS, a Node B (NB), an eNode B (eNB), an access point (AP), a wireless access unit, a base station controller, a node on a network, or the like.

A user equipment is an entity that communicates with a base station, and may also be referred to as a UE, a mobile station (MS), a mobile equipment (ME), a device, a terminal, a cellular phone, a smartphone, a computer, a multimedia system capable of performing a communication function, or the like.

An HARQ-ACK signal refers to an acknowledgement (ACK)/negative ACK (NACK) signal transmitted in an HARQ process, and will be simply expressed as "HARQ-ACK" for the convenience of description.

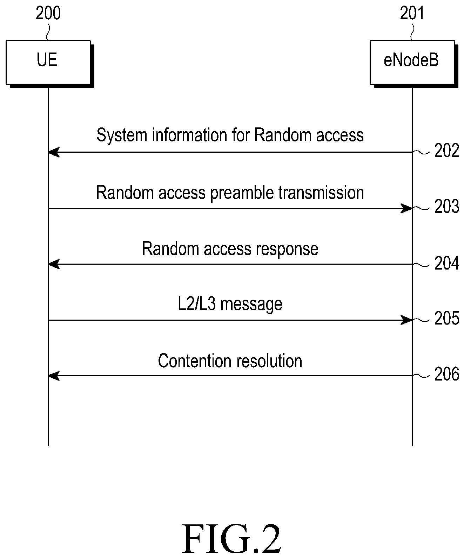

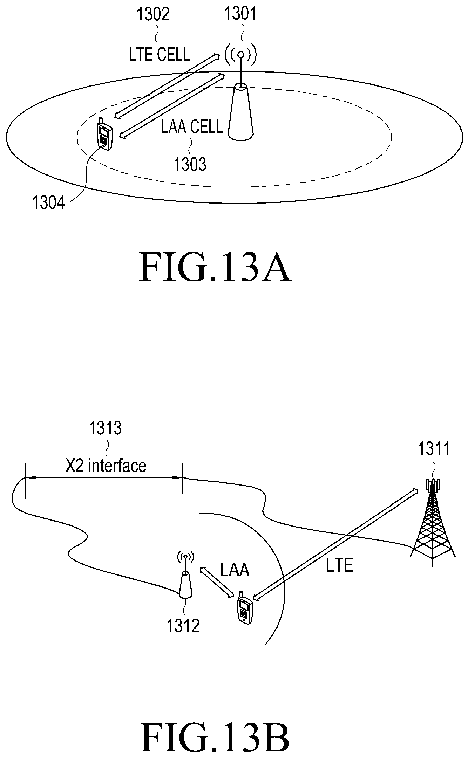

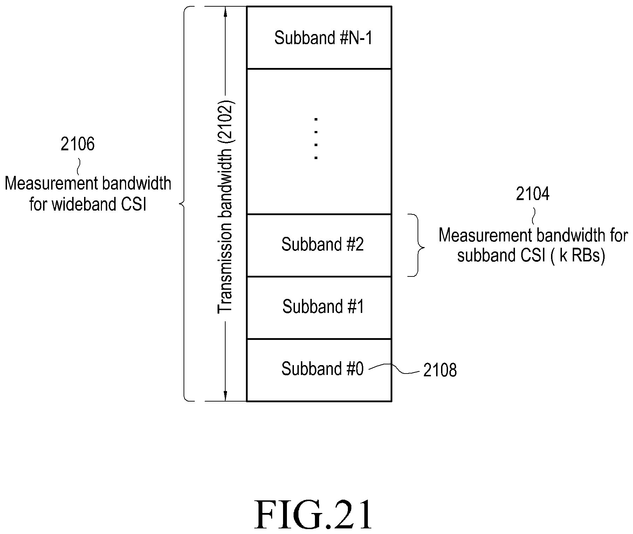

Hereinafter, in the present disclosure, a technique for supporting random access of a UE will be described with reference to FIG. 2 to FIG. 12, a technique for increasing the data rate of a system using an LAA cell will be described with reference to FIG. 13 to FIG. 20, and a subband CSI reporting technique for a low-cost UE will be described with reference to FIG. 21 to FIG. 32.

In some embodiments of the present disclosure, a new method and procedure required according to the coverage enhancement of a low-cost UE will be described, but the details of the present disclosure are not limited to a low-cost UE, and the described method and procedure may also be applied to a normal LTE UE requiring coverage enhancement without any modification or change in the details.

In the present disclosure, the terms "PDCCH", "PDSCH", "PUCCH", "PUSCH", and the like, which designate physical channels in the conventional LTE system, are used as they are for describing the operation of a low-cost UE requiring coverage enhancement, but even though physical channels for the low-cost UE are newly defined, the techniques described in the present disclosure may be employed without any modification or change made thereto.

In the process of the LTE standardization, it has been assumed that a UE requiring coverage enhancement needs to have about a 15dB coverage increase compared to a conventional UE (e.g., normal LTE UE). In order to enhance the coverage of a UE, repetition or bundling of the existing physical channel or a newly defined physical channel has been considered.

The repetition refers to a process of repeatedly transmitting a subframe, which includes information to be transmitted, several times (by a UE or base station). The bundling refers to a process of transmitting the same information several times through a plurality of subframes (by a UE or a base station), but using different HARQ redundancy versions or different physical channel formats for each subframe. Receivers of the UE and the base station can achieve coverage enhancement over a normal physical channel through soft combining or accumulation of physical channels transmitted using the repetition or bundling.

A repetition level required for coverage enhancement may vary according to the physical channels used for an uplink and a downlink, and may also have different values according to UEs. The repetition level may indicate the number of repetitions of physical subframes, and may also indicate a class (i.e., level) or representative value corresponding to the number of repetitions that is actually used. In the present disclosure, even when any one of the repetition and the bundling is mentioned with regard to a description for coverage enhancement, the description may cover both the repetition and the bundling.

In the 3GPP standardization process, coverage enhancement for a low-cost UE is under discussion, but since a normal UE (e.g., LTE UE) can also achieve coverage enhancement using the same method, the method and apparatus for coverage enhancement proposed in the present disclosure may also be applied in the same manner to a normal UE requiring coverage enhancement.

Since a low-cost UE requiring coverage enhancement needs to repeatedly receive or transmit a physical channel in order to receive communications with a base station, there is a need to define transmission and reception operations which are different from those for a normal LTE UE. In particular, for a low-cost UE that is in an initial access procedure, a method for determining a repetition level for transmission of a random access preamble and transmitting the random access preamble to a base station, and a method for repeatedly receiving a random access response (RAR) from the base station should be defined. Further, a method for transmitting a repetition level (information thereon) required for the UE to receive a random access response from the base station should also be determined.

FIG. 2 is a view for explaining a procedure of acquiring system information from a base station and performing access by a UE that performs an initial access process in the LTE system.

In FIG. 2, a UE 200 performing an initial access process receives system information required for initial access from an eNodeB 201 (202). The UE 200 may receive the information through a cell-common broadcast channel transmitted by the eNodeB 201. The UE 200 performing the initial access process may, for example, receive at least one of the following system information for initial access.

- Random access resource region configuration information
- Random access preamble information
- Random access response window size
- Random access preamble transmit power information
- Maximum number of random access preamble transmissions

The random access resource region configuration information may include a parameter for indicating time and frequency resource regions for use in transmitting a random access preamble to the eNodeB 201 by the UE 200.

The random access preamble information may include a parameter for configuring a random access preamble sequence used in the eNodeB 201. In the LTE system, each eNodeB configures 64 sequences required for random access preamble transmission by cyclic-shifting a Zadoff-Chu sequence with a sample length of 839, and the UE 200 may transmit a random access preamble to the eNodeB 201 using one of the 64 sequences according to the random access preamble information.

The random access response (RAR) window size information represents a time interval in which the UE 200 that has transmitted a random access preamble can receive an RAR corresponding to the random access preamble from the eNodeB 201. If the UE200 fails to receive an RAR within an RAR window, then the UE considers that the random access preamble has not been detected by the eNodeB 201, and retransmits a new random access preamble.

The random access preamble transmit power information may include parameters for determining transmission power for random access preamble initial transmission and retransmission by the UE 200.

The maximum number of random access preamble transmissions represents the maximum number of times by which the UE 200 can transmit a random access preamble.

Upon acquiring the system information of the eNodeB 201, the UE 200 transmits a random access preamble to the eNodeB 201 (203). Here, the UE 200 selects one of 64 Zadoff-Chu sequences, generates a random access preamble using the selected sequence, and transmits the generated random access preamble in a random access preamble transmission resource region configured by the eNodeB 201.

The eNodeB 201 attempts to detect random access preambles transmitted in random access preamble transmission regions by UEs in a cell, and may transmit an RAR signal to the corresponding UE in response to a detected random access preamble (204). Upon detecting a random access preamble from a specific UE, the eNodeB 201 should transmit an RAR to the detected random access preamble in an RAR window. The RAR signal transmitted by the eNodeB 201 may include various control information (e.g., uplink resource allocation information) for a signal to be transmitted to the eNodeB 201 by the UE 200 in the next step (204).

If the UE 200 that has transmitted the random access preamble (203) receives the RAR signal (204), then the UE 200 considers that the eNodeB 201 has detected the random access preamble, and may transmit, to the eNodeB 201, information required for initial access to the eNodeB through an L2/L3 (layer 2 or layer 3) message (i.e., msg3) in the higher layer (205).

Upon successfully receiving the L2/L3 message (205), the eNodeB 201 may transmit a contention resolution message to the UE 200 in order to inform the UE 200 that the L2/L3 message from the UE 200 has been received without contention with L2/L3 messages from other UEs (206). Through the above procedure (202 to 206), the initial access process of the UE 200 may be completed.

To obtain performance gain for insufficient coverage, a low-cost UE or normal LTE UE requiring coverage enhancement may communicate with a base station by repeatedly transmitting the same information in several subframes or receiving signals repeatedly transmitted by the base station and combining the received signals. Each of the transmission and reception signals used for the random access process as described in FIG. 2 may be transmitted once through one subframe, but may be repeatedly transmitted for a low-cost UE requiring coverage enhancement. That is, a base station or UE supporting coverage enhancement may repeatedly transmit system information, a random access preamble, a random access preamble response signal, an L2/L3 message, and a contention resolution message over several subframes. Accordingly, the repetition level of physical channels and physical signals for transmitting or receiving all of the above described signals may be configured for the UE before the initial access process under the control of the base station. However, since the base station cannot know the state of the UE in the initial access process, it is difficult for the base station to configure the repetition level of the respective channels. Accordingly, the UE itself requiring coverage enhancement may determine the repetition level of physical channels and transmit a signal including the determined repetition level.

The present disclosure defines a method for transmitting a random access preamble for initial access and receiving a random access response by a UE requiring coverage enhancement, and describes a specific method for completing the initial access with a base station.

<Embodiment 1>

A first embodiment is directed to a method for determining the repetition level of a random access preamble and a resource for transmitting the random access preamble when a UE performing initial access with a base station transmits the random access preamble.

For example, a UE located in a shadow area or the like in a building requires to enhance the coverage of a random access preamble in an initial access process with a base station. To this end, the UE may use a new random access preamble different from the random access preamble used in the LTE system, but in pursuit of coexistence with the conventional system, it is preferable for the UE to enhance coverage by repeatedly transmitting the existing random access preamble several times.

From the viewpoint of coverage enhancement, it will be always better for a UE operating in a coverage enhancement mode to transmit a random access preamble at the maximum allowable repetition level. However, since the transmission power of the UE and the transmission resource for the random access preamble may be wasted when the random access preamble is always transmitted at the maximum repetition level, it is necessary to determine the repetition level according to the required coverage enhancement. Accordingly, in order to achieve coverage enhancement in a random access process, a UE may repeatedly transmit a random access preamble, which is defined to have a transmission duration of 1-3msec, according to a repetition level.

Since a base station cannot know the location, transmission power, path-loss, and the like of a UE performing initial access, it may be difficult for the base station to determine whether to use a coverage enhancement mode or the repetition level of a random access preamble. Accordingly, a UE itself may determine the repetition level of a random access preamble in an initial access stage.

The UE may determine the repetition level of a random access preamble by the following alternative.

<Alternative 1-1>: Determination of repetition level of random access preamble on basis of downlink measurement of UE

A UE may measure reference signal received power (PSRP) by receiving a cell-specific reference signal (CRS) transmitted by a base station for channel estimation and synchronization. The UE may use the measured RSRP to determine whether coverage enhancement is required, and then may determine the repetition level of a random access preamble on the basis of the RSRP when coverage enhancement is required.

The base station may configure, through system information, an RSRP threshold for UEs, which is required for the UEs to determine whether to operate in the coverage enhancement mode and determine the repetition level.

If the base station has configured $X_{RSRP\_CE}$ (dB) for UEs and the RSRP (dB) measured by the UE is less than $X_{RSRP\_CE}$ (dB), then the UE may operate in the coverage enhancement mode, but if otherwise, the UE follows the same random access procedure as a normal UE. Further, if the base station has configured $X_{RSRP\_CE\_1}$ (dB), $X_{RSRP\_CE\_2}$ (dB), $X_{RSRP\_CE\_3}$ (dB), and repetition levels corresponding to each threshold for UEs (where, $X_{RSRP\_CE} \geq X_{RSRP\_CE\_1}$ $X_{RSRP\_CE\_2} \geq X_{RSRP\_CE\_3}$), then the UE may determine the repetition level by comparing the measured RSRP (dB) with each threshold. For example, if the measured RSRP satisfies the condition of $X_{RSRP\_CE\_1} > RSRP \geq X_{RSRP\_CE\_2}$, then the UE may determine to transmit the random access preamble using the repetition level corresponding to $X_{RSRP\_CE\_2}$. When the base station allocates different random access preamble transmission resources according to repetition levels, the UE transmits the preamble in the random access preamble transmission resource corresponding to the determined repetition level. The above-mentioned $X_{RSRP\_CE}$, $X_{RSRP\_CE\_1}$, $X_{RSRP\_CE\_2}$, and $X_{RSRP\_CE\_3}$ may be configured by the base station for each cell, or may be fixed as predetermined values.

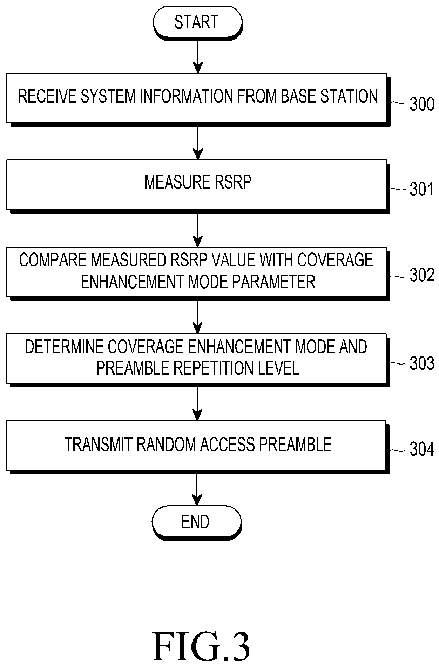

FIG. 3 is a flowchart illustrating a method of determining the coverage enhancement mode or repetition level of a random access preamble on the basis of downlink measurement and transmitting the random access preamble by a UE according to alternative 1-1 of a first embodiment of the present disclosure.

In step 300, a UE acquires system information from a base station. The system information received by the UE from the base station may include at least one of thresholds for determining the coverage enhancement mode and each repetition level, the number of repetitive random access preamble transmissions corresponding to each threshold, and a random access preamble transmission region corresponding to each repetition level.

In step 301, the UE measures RSRP on the basis of a downlink RS.

In step 302, the UE compares the RSRP measured in step 301 with the thresholds.

In step 303, the UE may determine the coverage enhancement mode and the repetition level on the basis of the result of the comparison in step 302. The UE may also perform steps 302 and 303 as a single step. The UE may perform the determination of the repetition level in step 303 according to the method as described in alternative 1-1.

In step 304, the UE transmits the random access preamble. When the coverage enhancement mode is required, the UE may repeatedly transmit the random access preamble at the determined repetition level (i.e., number of repetitions) in the random access preamble transmission resource region corresponding to the repetition level. Here, the UE may transmit the random access preamble using the maximum transmission power. When the coverage enhancement mode is not required, the UE may also transmit the random access preamble according to a conventional random access procedure.

<Alternative 1-2>: Determination of repetition level of random access preamble according to repetitive reception level of downlink synchronization channel

A UE requiring coverage enhancement uses a PSS/SSS, which is transmitted in the same manner as in the conventional LTE system, for downlink synchronization and cell search. In contrast to a conventional normal UE, the UE may increase coverage through accumulation of a plurality of periodically transmitted PSSs/SSSs in order to enhance coverage. Accordingly, when a UE in an initial access stage fails to complete synchronization and cell search using one PSS/SSS, the UE performs synchronization and cell search by accumulating one or more PSSs/SSSs. When a UE has used one or more accumulated PSSs/SSSs for synchronization and cell search, the UE may determine to repeatedly transmit one random access preamble for the coverage enhancement mode. Further, the repetition level of transmissions of the random access preamble may be determined according to the number of PSSs/SSSs accumulated for synchronization and cell search.

For example, when thresholds for the number of accumulations, $N_{ACC\_1}$, $N_{ACC\_2}$, $N_{ACC\_3}$ ($N_{ACC\_3} \geq N_{ACC\_2} \geq N_{ACC\_1}$), and the repetition levels of a random access preamble according to each threshold have been configured for the UE and the UE has completed synchronization and cell search by accumulating PSSs/SSSs N times, the UE may determine the repetition level by comparing $N_{ACC\_1}$, $N_{ACC\_2}$, and $N_{ACC\_3}$ with N. For example, when $N_{ACC\_2} \geq N > N_{ACC\_1}$, the UE may use the repetition level of the random access preamble corresponding to $N_{ACC\_2}$. The above thresholds $N_{ACC\_1}$, $N_{ACC\_2}$, and $N_{ACC\_3}$ may be configured by the base station for each cell, or may be fixed as predetermined values.

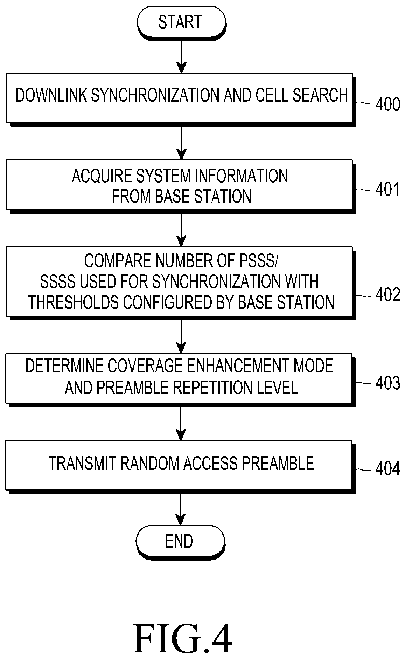

FIG. 4 is a flowchart illustrating a method of determining the coverage enhancement mode or repetition level of a random access preamble according to the repetitive reception level of a downlink synchronization channel and transmitting the random access preamble by a UE according to alternative 1-2 of the first embodiment of the present disclosure.

In step 400, a UE performs synchronization with a base station and cell search using a synchronization signal transmitted by the base station. When the UE cannot perform the synchronization and the cell search using one PSS/SSS, the base station may increase PSSs/SSSs and perform synchronization using a certain number of accumulated PSSs/SSSs, and the UE may store the number of PSSs/SSSs used for the synchronization when the synchronization is completed.

In step 401, the UE acquires system information from the base station. The system information received by the UE from the base station may include thresholds ($N_{ACC\_1}$, $N_{ACC\_2}$, and $N_{ACC\_3}$) for determining a repetition level, the number of repetitive random access preamble transmissions corresponding to the thresholds, a random access preamble transmission region corresponding to each repetition level, and the like.

In step 402, the UE compares the accumulated number of PSSs/SSSs used for the synchronization and the cell search with the thresholds $N_{ACC\_1}$, $N_{ACC\_2}$, and $N_{ACC\_3}$ configured by the base station.

In step 403, the UE may determine the coverage enhancement mode and the repetition level on the basis of the result of the comparison in step 402. The UE may also perform steps 402 and 403 as a single step. The UE may perform the determination of the repetition level in step 403 according to alternative 1-2.

In step 404, the UE transmits the random access preamble. When the coverage enhancement mode is required, the UE may repeatedly transmit the random access preamble at the determined repetition level in the random access preamble transmission resource region corresponding to the repetition level. The UE may transmit the random access preamble using the maximum transmission power. When the coverage enhancement mode is not required, the UE may also transmit the random access preamble according to a conventional random access procedure.

<Alternative 1-3>: Determination of repetition level of random access preamble according to repetitive reception level of downlink broadcast channel

In order to acquire a master information block (MIB) basically necessary for communications with a base station after synchronization and cell search, a UE should receive a physical broadcast channel (PBCH). A UE requiring coverage enhancement cannot acquire an MIB only using a conventional PBCH. Accordingly, a new PBCH for a coverage enhancement mode needs to be defined for a UE performing initial access, or a PBCH needs to be repeatedly transmitted in addition to the transmission of the conventional PBCH.

In receiving a PBCH in order to acquire an MIB, when a UE in an initial access state cannot acquire system information using a conventional PBCH, the UE may determine that coverage enhancement is required, and may attempt to receive a new PBCH or may attempt to acquire an MIB using a PBCH repeatedly transmitted in addition to the conventional PBCH.

Further, in receiving a PBCH in order to acquire an MIB, when a UE in an initial access state determines, in the process of synchronization through an RSRP measurement value or a PSS/SSS, that a coverage enhancement mode is required, the UE may attempt to receive a new PBCH or may attempt to acquire an MIB using a PBCH repeatedly transmitted in addition to the conventional PBCH.

When a UE uses a new PBCH or the repeatedly transmitted conventional PBCH for coverage enhancement, the UE may also transmit a random access preamble using a coverage enhancement mode in a random access process in the same manner. In order to enhance the coverage of all UEs in a cell, a base station may always transmit a new PBCH or the repeatedly transmitted conventional PBCH at the maximum repetition level. Accordingly, a UE in an initial access process may try to decode a new PBCH or the conventional PBCH at various repetition levels, and may determine the repetition level of a random access preamble as the minimum repetition level at which the decoding is successful.

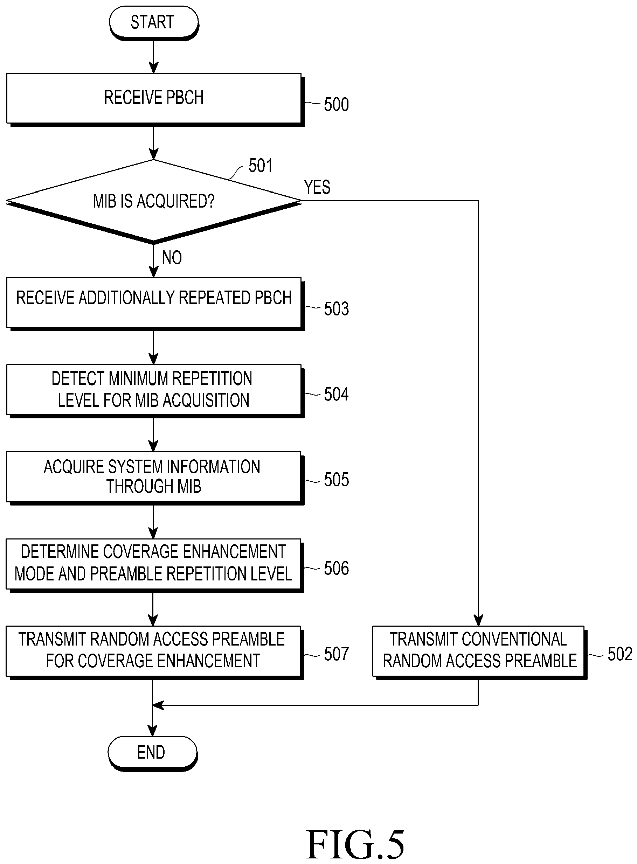

FIG. 5 is a flowchart illustrating a method of determining the coverage enhancement mode or repetition level of a random access preamble using the repetitive reception level of a downlink broadcast channel and transmitting the random access preamble by a UE according to alternative 1-3 of the first embodiment of the present disclosure.

In step 500, a UE decodes a PBCH for a conventional UE.

In step 501, the UE may check whether an MIB has been acquired through the PBCH. If the UE determines, in the process of synchronization through an RSRP measurement value or a PSS/SSS, that a coverage enhancement mode is required, the UE may not perform steps 500 and 501, and may proceed to step 503.

In step 501, when the UE acquires an MIB through the conventional PBCH, the UE may determine that coverage enhancement is not required, and may proceed to step 502 and transmit a conventional random access preamble.

When the UE cannot acquire an MIB through the received PBCH in step 501, the UE may proceed to step 503 and receive a PBCH additionally repeatedly transmitted for coverage enhancement.

In step 504, the UE may receive the PBCH at various repetition levels and determine the minimum repetition level for MIB acquisition.

In step 505, the UE may acquire system information through the MIB. The system information received by the UE from the base station may include at least one of thresholds for determining a repetition level, the number of repetitive random access preamble transmissions corresponding to the repetition level, and a random access preamble transmission region corresponding to each repetition level.

In step 506, the UE may determine the coverage enhancement mode and the repetition level on the basis of the minimum level for MIB acquisition and the thresholds configured by the base station. The UE may perform the determination of the repetition level in step 506 according to the method as described in alternative 1-3.

In step 507, the UE transmits the random access preamble for coverage enhancement. The UE may transmit the random access preamble using the maximum transmission power. The UE may repeatedly transmit the random access preamble at the determined repetition level in the random access preamble transmission resource region corresponding to the repetition level.

<Alternative 1-4>: Determination of repetition level of random access preamble according to repetitive reception level of physical downlink control channel or physical downlink shared channel for downlink data reception

After an MIB is acquired through a PBCH, a UE may receive a physical downlink control channel (PDCCH) and a physical downlink shared channel (PDSCH) in order to receive a system information block (SIB) including system information of a base station. An SIB is transmitted through a PDSCH, and a PDCCH is a channel for indicating resource allocation information for the PDSCH. A base station may transmit an SIB over a PDCCH and a PDSCH that are repeated for a UE in a coverage enhancement mode. When a UE receives a PBCH in a coverage enhancement mode or determines, through an RSRP measurement, synchronization, and cell search, that coverage enhancement is required, the UE may determine to receive an SIB in a PDCCH or PDSCH repeatedly transmitted for coverage enhancement. In receiving the repeatedly transmitted PDCCH or PDSCH, the UE may attempt to receive the PDCCH or PDSCH at several repetition levels lower than the maximum repetition level so as to determine the minimum repetition level for the reception of the corresponding channel, and may determine the determined repetition level as the repetition level of a random access preamble.

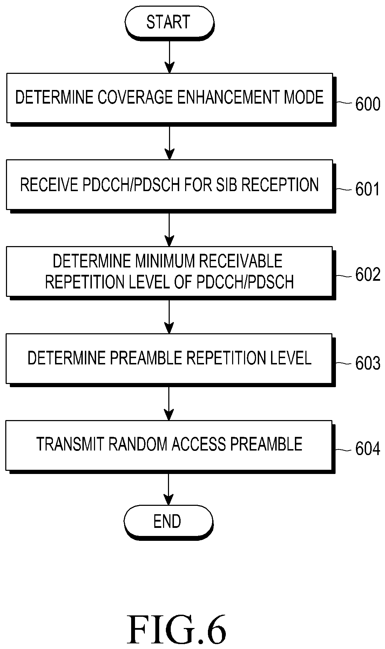

FIG. 6 is a flowchart illustrating a method of determining the coverage enhancement mode or repetition level of a random access preamble using the repetitive reception level of a physical downlink control channel or physical downlink shared channel for downlink data reception and transmitting the random access preamble by a UE according to alternative 1-4 of the first embodiment of the present disclosure.

In step 600, a UE may determine a coverage enhancement mode using alternative 1-1, 1-2, or 1-3.

In step 601, the UE receives a PDCCH and a PDSCH for SIB acquisition. The UE may acquire system information through the SIB. The system information may include at least one of thresholds for determining a repetition level, the corresponding number of repetitive random access preamble transmissions, and a random access preamble transmission region corresponding to each repetition level.

In step 602, the UE may determine the minimum repetition level for SIB reception. The UE may perform the determination of the repetition level in step 602 according to alternative 1-4. That is, the UE may attempt to decode the PDCCH and the PDSCH by applying various repetition levels thereto, and may determine the minimum repetition level at which the decoding is successful.

In step 603, the UE may determine the repetition level at which a random access preamble is transmitted. Here, the UE may determine the minimum repetition level as the repetition level for transmitting the random access preamble.

In step 604, the UE transmits the random access preamble for coverage enhancement. The UE may repeatedly transmit the random access preamble at the corresponding repetition level in the random access preamble transmission resource region corresponding to the repetition level. Here, the UE may transmit the random access preamble using the maximum transmission power. When the coverage enhancement mode is not required, the UE may also transmit the random access preamble according to a conventional random access procedure.

<Alternative 1-5>: Determination of repetition level of random access preamble on basis of random access preamble power control method

As described above, a UE may acquire system information from a base station and perform random access to the base station. The random access is a process through which a UE informs a base station of its existence in an initial access procedure, and the UE may start the random access by transmitting a random access preamble to the base station. In transmitting a random access preamble, a UE determines the transmission power of the random access preamble according to the path-loss between a base station and the UE, the transmission power capacity of the UE, and the like, and transmits the random access preamble according to the determined transmission power. The transmission power of a random access preamble may be determined by Equation 1:

<Equation 1>

$$P_{PRACH} = \min\{P_{CMAX}, PREAMBLE\_RECEIVED\_TARGET\_POWER+PL_C\} \ [dBm]$$

In Equation 1, $P_{PRACH}$ denotes transmission power to be used for transmitting a random access preamble by a UE. $P_{CMAX}$ denotes the maximum allowable transmission power of the UE. PREAMBLE_RECEIVED_TARGET_POWER denotes target reception power for receiving the random access preamble by a base station, and is configured by the base station. $PL_C$ denotes the path-loss between the UE and the base station, measured by the UE on the basis of RSRP. It can be assumed that a UE requiring coverage enhancement has greater $PL_C$ than that of a normal UE. Therefore, for a UE requiring coverage enhancement, the transmission power of a random access preamble may be limited to $P_{CMAX}$. Thus, the UE requiring coverage enhancement may be considered to require coverage enhancement by $X_{Remained}$ in Equation 2:

<Equation 2>

$$X_{Remained} = PREAMBLE\_RECEIVED\_TARGET\_POWER + PL_C - P_{CMAX}$$

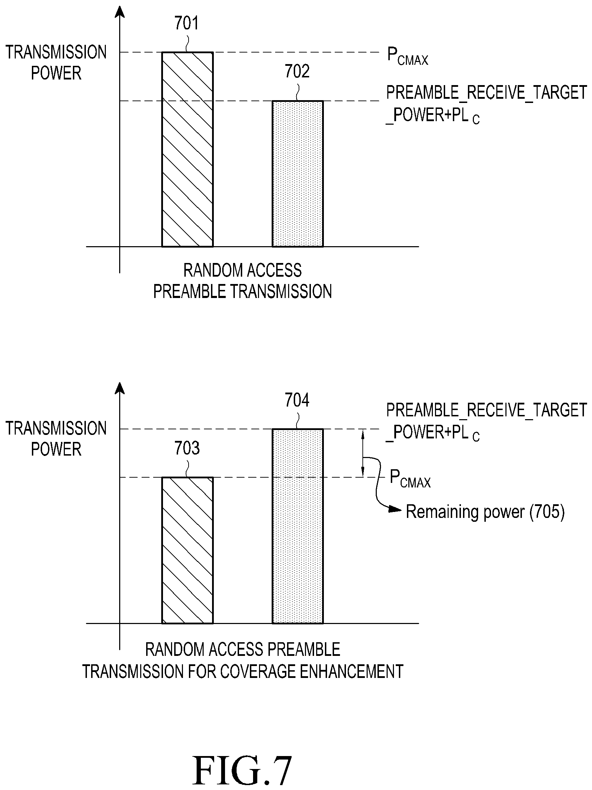

FIG. 7 is a graph illustrating a conceptual comparison between a case of requiring coverage enhancement and a case of requiring no coverage enhancement on the basis of the calculated transmission power of a random access preamble according to the present disclosure.

When coverage enhancement is not required, the transmission power of a random access preamble for a UE is calculated as (PREAMBLE_RECEIVED_TARGET_POWER + $PL_C$) 702 that would be less than $P_{CMAX}$ 701. Accordingly, the UE may transmit a random access preamble using transmission power at which a base station can successfully decode the random access preamble.

When coverage enhancement is required, the transmission power of a random access preamble for a UE is calculated as (PREAMBLE_RECEIVED_TARGET_POWER + PL$_C$) 704 that would be greater than P$_{CMAX}$ 703. However, the UE can transmit a random access preamble only using P$_{CMAX}$ 703. In this case, it can be considered that transmission power corresponding to X$_{Remained}$ 705 is further required for a base station to successfully detect the random access preamble. Accordingly, the UE may also determine whether coverage enhancement is required, on the basis of X$_{Remained}$.

If the base station has configured X$_{Remaining\_CE}$ (dB) for UEs and X$_{Remained}$(dB) calculated as further required transmission power by the UE is greater than X$_{Remaining\_CE}$ (dB), then the UE may operate in a coverage enhancement mode, but if otherwise, the UE follows the same random access procedure as a normal UE. Further, if the base station has configured X$_{Remaining\_CE\_1}$ (dB), X$_{Remaining\_CE\_2}$ (dB), X$_{Remaining\_CE\_3}$ (dB), and repetition levels corresponding to each threshold for UEs (where, X$_{Remaining\_CE\_1}$ $\geq$ X$_{Remaining\_CE\_2}$ $\geq$ X$_{Remaining\_CE\_3}$ $\geq$ X$_{Remaining\_CE}$), then the UE may determine the repetition level by comparing the calculated X$_{Remained}$(dB) with each threshold. For example, if the calculated X$_{Remained}$(dB) satisfies the condition of X$_{Remaining\_CE\_1}$ > X$_{Remained}$ $\geq$ X$_{Remaining\_CE-2}$, then the UE may transmit the random access preamble using the repetition level corresponding to X$_{Remaining\_CE\_1}$. Here, when the base station allocates different random access preamble transmission resources according to repetition levels, the UE transmits the preamble in the random access preamble transmission resource corresponding to the determined repetition level. The above X$_{Remaining\_CE}$, X$_{Remaining\_CE\_1}$ (dB), X$_{Remaining\_CE\_2}$ (dB), and X$_{Remaining\_CE\_3}$ (dB) may be configured by the base station for each cell, or may be fixed as predetermined values. When all Of X$_{Remaining\_CE}$, X$_{Remaining\_CE\_1}$ (dB), X$_{Remaining\_CE\_2}$ (dB), and X$_{Remaining\_CE\_3}$ are set to "0" by the base station, the UE may always transmit the random access preamble at the maximum repetition level in the coverage enhancement mode.

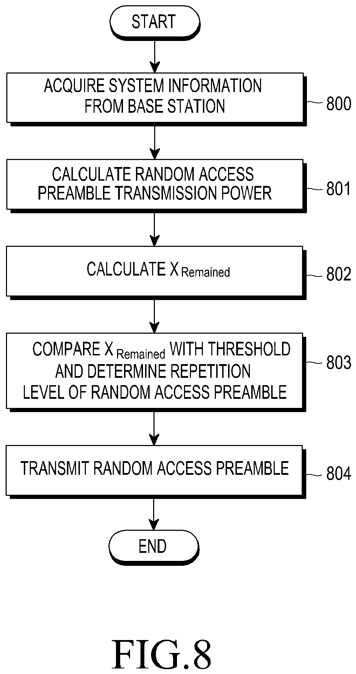

FIG. 8 is a flowchart illustrating a method of determining the coverage enhancement mode or repetition level of a random access preamble on the basis of a random access preamble power control method and transmitting the random access preamble by a UE according to alternative 1-5 of the first embodiment of the present disclosure.

In step 800, a UE acquires system information from a base station. The system information received by the UE from the base station may include at least one of thresholds for determining the coverage enhancement mode and each repetition level, the corresponding number of repetitive transmissions of a random access preamble, and a random access preamble transmission region corresponding to each repetition level.

In step 801, the UE may calculate random access preamble transmission power. As an example, the UE may calculate the transmission power using Equation 1.

In step 802, the UE may calculate X$_{Remained}$ that is transmission power further required for successful preamble detection. As an example, the UE may calculate X$_{Remained}$ using Equation 2.

In step 803, the UE may determine the coverage enhancement mode and the repetition level by comparing X$_{Remained}$ with the thresholds configured by the base station. The determination in step 803 may be performed according to alternative 1-5.

In step 804, the UE transmits the random access preamble. When the coverage enhancement mode is required, the UE may repeatedly transmit the random access preamble at the determined repetition level in the random access preamble transmission resource region corresponding to the repetition level. The UE may transmit the random access preamble using the maximum transmission power. When the coverage enhancement mode is not required, the UE may also transmit the random access preamble according to a conventional random access procedure.

The above five alternatives for determining the repetition level of a random access preamble in transmitting the random access preamble by a UE according to the first embodiment may be used solely or in combination. As an example of using a combination of several alternatives, the UE may perform coverage enhancement for a random access preamble only when it is determined through alternatives 1-1 to 1-5 that a coverage enhancement mode is required, wherein the repetition level of the random access preamble may be determined through alternative 1-5. In addition to the combination as described above, the coverage enhancement mode and repetition level of a random access preamble may be determined by various combinations of the above five alternatives.

<Embodiment 2>

A second embodiment relates to a method for determining a repetition level for transmitting a random access response (RAR) to a UE requiring coverage enhancement by a base station that has received a random access preamble and a method for receiving the RAR by the UE requiring coverage enhancement.

If a UE transmits a random access preamble in an initial access process, the UE may receive an RAR from a base station. In the LTE system, the RAR is transmitted through a PDSCH that is scheduled by a PDCCH scrambled by a random access-radio network temporary identifier (RA-RNTI). The UE and the base station may calculate the RA-RNTI through Equation 3:

<Equation 3>

$$RA\text{-}RNTI = 1 + t\_id + 10*f\_id \quad (0 \le t\_id < 10, \ 0 \le f\_id < 6)$$

In Equation 3, t_id denotes the index of a subframe where the random access preamble has be transmitted in one radio frame, and f-id denotes the index of a resource (frequency resource) where the random access preamble has be transmitted in a random access preamble resource region.

For a UE (e.g., low-cost UE) requiring coverage enhancement and a base station, an RAR may also be received using a PDCCH scrambled by an RA-RNTI that is used in the LTE system. However, when a random access preamble is continuously repeated in a radio frame, it is difficult to use the existing RA-RNTI, and thus a new RA-RNTI may be needed. Here, the UE may use the index of a random access preamble sequence, which has been used to generate the random access preamble, as the RA-RNTI. Since the UE selects, scrambles, and transmits one sequence among random access preamble sequences 0 to 63, there is an advantage in that the current PDCCH structure can be used without any change.

Further, the RAT may be received through a PDSCH in a given time-frequency resource region without a control channel for scheduling.

A base station should repeatedly transmit a PDSCH including an RAR to a UE requiring coverage enhancement so that the UE requiring coverage enhancement can receive the RAR. The repetition level of the RAR transmitted by the base station to the UE requiring coverage enhancement may be determined as follows.

<Alternative 2-1> Use of maximum repetition level

When a UE requiring coverage enhancement repeatedly transmit a random access preamble once or more, a base station detects the random access preamble and can recognize that the UE requires coverage enhancement. With regard to the transmission of an RAR, the base station may always transmit the RAR to the UE requiring coverage enhancement using the fixed maximum repetition level regardless of the repetition level of the random access preamble. In receiving the RAR, the UE that has repeatedly transmitted the random access preamble may always receive a PDSCH including the RAR using the maximum repetition level.

<Alternative 2-2>: Transmission at repetition level used for random access preamble

With regard to the transmission of an RAR, a base station may transmit the RAR to a UE requiring coverage enhancement using the same repetition level as that used by the UE for the transmission of the random access preamble. That is, the UE that has repeatedly transmitted the random access preamble may receive a PDSCH including the RAR using the repetition level used for the transmission of the random access preamble. Here, RARs having the same repetition level may be grouped together in the same PDSCH and may be transmitted through the PDSCH.

<Alternative 2-3>: UE's reporting to base station using random access preamble group

When a base station transmits an using the maximum repetition level regardless of a downlink repetition level required for a UE, this may be inefficient in terms of the resource efficiency of a system and the power consumption efficiency of a UE. Further, since a repetition level required for a UE to transmit a random access preamble and a repetition level required for downlink reception of the UE may be different, it may not be appropriate to map the repetition level used for random access preamble transmission one-to-one to a repetition level for RAR transmission. As an example, when the UE has failed in RAR reception and increases the repetition level of a random access preamble, a repetition level required for downlink reception may be different form the repetition level used for the transmission of the random access preamble. Accordingly, a UE requiring coverage enhancement may report a repetition level, which is required for the UE to receive an RAR, to a base station in a random access process, and the base station may transmit an RAR for a detected random access preamble using the repetition level reported by the UE.

For reporting of a repetition level required for downlink reception (i.e., repetition level required for RAR reception), this alternative proposes a method for dividing all random access preamble sequences used in one cell into a plurality of groups and reporting an RAR repetition level required for a UE to a base station using group information of the sequences by the UE.

To this end, the base station may transmit, to all UEs in the cell, information on the number of random access preamble groups and preamble sequences included in each group, and information on a repetition level corresponding to each sequence group through system information. The system information may also be configured using a separate system information block (SIB) that is transmitted only to a low-cost UE requiring coverage enhancement.

In this alternative, one method for determining a downlink repetition level through a sequence group is to map a preamble sequence group configured by a base station one-to-one to a physical downlink channel repetition level supported by the base station. Then, one preamble sequence group may represent one downlink repetition level. A UE may determine a random access preamble sequence group according to a repetition level required for downlink reception, which the UE has obtained through measurement, and may randomly select a random access preamble sequence in the determined group and generate a random access preamble using the selected random access preamble sequence. Upon detecting a random access preamble, a base station may discover a downlink repetition level required for a UE, which has transmitted the random access preamble, by identifying a sequence group to which the detected random access preamble belongs. For example, when the UE transmits a random access preamble using a preamble sequence randomly selected in a preamble sequence group representing "downlink repetition level 1", the base station may transmit an RAR using the number of repetitions according to "downlink repetition level 1".

In this alternative, another method for determining a downlink repetition level through a sequence group is to allow a preamble sequence group configured by a base station to indicate a relative offset to a downlink repetition level. A base station may determine a downlink repetition level by adding a relative offset indicated by a sequence group to the current repetition level required for random access preamble transmission (selected by a UE). That is, each preamble sequence group indicates an offset having a plus/minus (+/-) value to a repetition level, and a base station may determine a downlink repetition level by adding an offset indicated by a preamble sequence group to a repetition level used for random access preamble transmission. A UE may determine a random access preamble sequence group on the basis of a repetition level required for downlink reception, which the UE has obtained through measurement, and a repetition level required for random access preamble transmission, and may randomly select a random access preamble sequence in the determined preamble sequence group and generate a random access preamble using the selected random access preamble sequence. Upon detecting a random access preamble, a base station may determine a downlink repetition level according to a sequence group to which the detected random access preamble belongs and the repetition level of the random access preamble.

In short, a UE may randomly select a preamble sequence in a preamble sequence group corresponding to a physical downlink channel repetition level required for the UE, generate a random access preamble using the selected preamble sequence, and transmit the generated random access preamble. Upon detecting a random access preamble, a base station may determine a repetition level required for RAR transmission through a preamble sequence. Then, after the UE transmits a random access preamble, the UE may receive an RAR in a downlink on the assumption that the base station transmits the RAR according to the RAR repetition level requested by the UE.

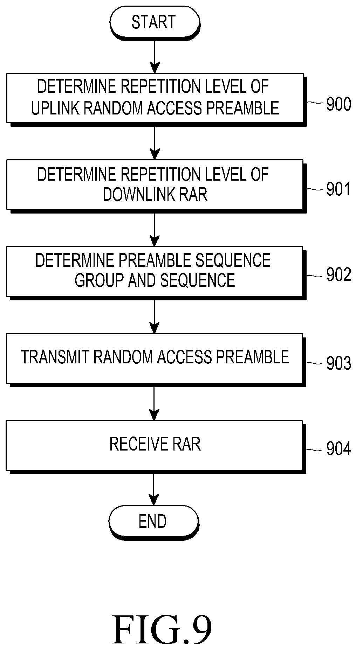

FIG. 9 is a flowchart illustrating a method of determining a downlink repetition level for receiving an RAR and reporting the determined downlink repetition level to a base station by a UE according to alternative 2-3 of the second embodiment of the present disclosure.

In step 900, a UE determines a repetition level for random access preamble transmission. The UE may determine the repetition level for random access preamble transmission using alternatives 1-1 to 1-5 of the first embodiment. Alternatively, the UE may also optionally determine the repetition level for random aces preamble transmission and determine to use a repetition level increased compared to the previous repetition level when the UE has previously transmitted a random access preamble, but has not received an RAR in an RAR window.

In step 901, the UE determines a downlink repetition level for RAR transmission.

In step 902, the UE determines a preamble sequence for configuring a random access preamble. The UE may determine a preamble sequence group on the basis of the downlink repetition level and randomly select a preamble sequence in the determined preamble sequence group according to alternative 2-3 of the second embodiment.

In step 903, the UE generates a random access preamble using the preamble sequence selected in step 902 and transmits the generated random access preamble to a base station.

In step 904, the UE receives an RAR from the base station. The UE may attempt to receive the RAR on the assumption that the base station transmits the RAR according to the downlink repetition level requested by the UE when transmitting the RAR.

<Embodiment 3>

A third embodiment is directed to a method for allocatng, by a base station, a physical uplink shared channel (PUSCH) resource for repeatedly transmititng message 3 (hereinafter referred to as "msg 3") when a UE that has received an RAR transmits msg3 for contention resolution, and an operation of the UE.

In the LTE system, a base station transmits an RAR to a UE that has transmitted a random access preamble, wherein the RAR includes resource allocation information for a PUSCH for msg3 transmission, and thus the UE can transmit msg 3 in the PUSCH using the resource allocation information.

The resource allocation information included in the RAR contains only resource block (RB) allocation information for a PUSCH, which is allocated to one fixed subframe in the time domain. However, since a PUSCH transmitted by a UE requiring coverage enhancement may be repeated over multiple subframes, the resource allocation information is required to include information on an RB for the PUSCH and a subframe repetition level.

<Alternative 3-1 >: Reutilization of 3-bit TPC field of RAR field consisting of 20 bits

A base station may determine the repetition level of a PUSCH for msg3 transmission by reutilizing a 3-bit transmit power control (TPC) field of an RAR field consisting of 20 bits. One bit of 3 bits of the TPC field may be used as a coverage enhancement indication bit indicating whether a UE should be in a coverage enhancement mode for subsequent uplink transmission, and the other two bits may be used as bits indicating a repetition level or TPC. For example, when the coverage enhancement indication bit is set to "1", the corresponding UE operates in a coverage enhancement mode, and the other two bits may be used to indicate the repetition level of msg3. For example, when the coverage enhancement indication bit is set to "0", the other two bit may be used as TPC, the range of which is reduced. The base station may configure the TPC field of an RAR, as described above, according to the necessary repetition level of a PUSCH and transmit the RAR with the configured TPC field to a UE that has transmitted a random access preamble for coverage enhancement. The UE that has transmitted a random access preamble using a repetition level in order to enhance coverage may determine the repetition level of PUSCH transmissions for msg3 according to the TPC included in the RAR.

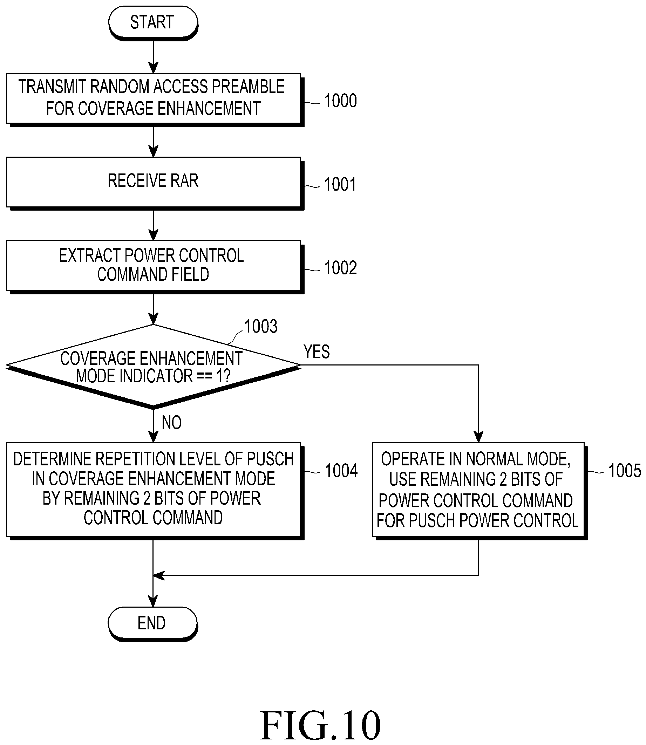

FIG. 10 is a flowchart illustrating a method of determining the repetition level of a PUSCH for msg3 transmission using an RAR, which a base station transmits, by a UE according to alternative 3-1 of a third embodiment of the present disclosure.
In step 1000, a UE transmits a random access preamble, and waits for an RAR to be received for a period of time corresponding to a certain window.
In step 1001, the UE receives a response, that is, an RAR, from a base station.
In step 1002, the UE extracts a TCP field from the RAR message.
In step 1003, the UE determines whether the 1-bit coverage enhancement indication bit of the TPC field is set to "1", and if the coverage enhancement indication bit is set to "1", proceeds to step 1004, but if otherwise, proceeds to step 1005.
In step 1004, the UE may repeatedly transmit msg3 in a PUSCH according to a repetition level indicated by the other two bits of the TPC field.
In step 1005, the UE operates in a normal mode, and the other two bits of the TPC field may be used for PUSCH power control. Here, the TPC field has an offset, the range of which is reduced compared to a conventional TPC field.

<Alternative 3-2>: Use of unused field of RAR field consisting of 20 bits

A base station may remove a field, which is not used for a low-cost UE, from an RAR field consisting of 20 bits, and may use the removed field to indicate the repetition level of a PUSCH for msg3 transmission. For example, a hopping flag field, a UL delay field, or a CSI request field in an RAR may not be used for a low-cost UE. Here, the low-cost UE may utilize these 3 bits as a coverage enhancement indication bit (1 bit) and a repetition level indication bit (2 bits).
PUSCH repetition level information configured for a UE through an RAR may be used as not only the repetition level of a PUSCH for msg3 transmission, but also a repetition level for subsequent uplink data transmission. After a random access process is completed, a base station may also semi-statically indicate the PUSCH/PUCCH repetition level of a specific UE using radio resource control (RRC) signaling for the UE.

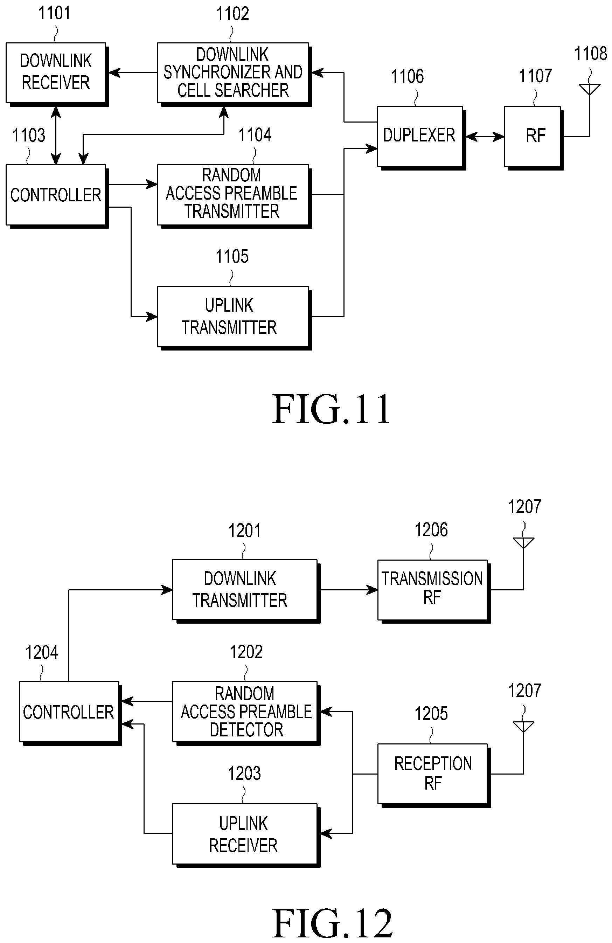

FIG. 11 illustrates a configuration of a UE apparatus according to some embodiments of the present disclosure.
As an example, the UE apparatus of FIG. 11 may perform the first embodiment, the second embodiment, or the third embodiment of the present disclosure.
The UE apparatus may include at least one of a downlink receiver 1101, a downlink synchronizer and cell searcher 1102, a controller 1103, a random access preamble transmitter 1104, an uplink transmitter 1105, a duplexer 1106, an RF block 1107, and an antenna 1108.
The downlink synchronizer and cell searcher 1102 or the downlink receiver 1101 may receive a downlink signal, and at the same time may perform measurements and calculations for the determination on a coverage enhancement mode and the determination of the repetition level of a random access preamble.
The controller 1103 may control random access in an initial access process through the coverage enhancement mode and the repetition level of a random access preamble, determined through the measurements and calculations of the UE. It will be understood that the methods of an UE as described in the above embodiments are performed by the controller 1103.
The random access preamble transmitter 1104 may transmit a random access preamble for coverage enhancement under the control of the controller 1103.
The uplink transmitter 1105 may transmit a signal, the coverage of which needs to be enhanced, to a base station under the control of the controller 1103.

The duplexer 1106, which is a module for distinguishing between uplink signal transmission and downlink signal reception in the time domain, may be connected to the RF block 1107.

The RF block 1107 may perform RF processing for an input signal, and may transmit or receive an RF signal through the antenna 1108.

FIG. 12 illustrates a configuration of a base station apparatus according to some embodiments of the present disclosure.

As an example, the base station apparatus of FIG. 12 may perform the first embodiment, the second embodiment, or the third embodiment of the present disclosure.

The base station apparatus may include at least one of a downlink transmitter 1201, a random access preamble detector 1202, an uplink receiver 1203, a controller 1204, a reception RF block 1205, a transmission RF block 1206, and an antenna 1207.

The downlink transmitter 1201 may transmit a synchronization signal (i.e., PSS, SSS) for downlink synchronization and PBCHs, PDSCHs, and PDCCHs for a normal UE and a UE requiring coverage enhancement.

The random access preamble detector 1202 may detect a random access preamble transmitted at a certain repetition level.

The uplink receiver 1203 may receive a PUCCH and a PUSCH transmitted by a UE.

The controller 1204 may determine whether to transmit an RAR to a UE according to the detection of the random access preamble, and may assign the repetition level of a PUSCH to be subsequently transmitted by the UE. It will be understood that the methods of a base station as described in the above embodiments are performed by the controller 1204.

The transmission RF block 1206 may perform RF processing for an input signal, and may transmit an RF signal to a UE through the base station antenna 1207.

The reception RF block 1205 may perform RF processing for an RF signal input from the base station antenna 1207, and may transfer the processed RF signal to the random access preamble detector 1202 or the uplink receiver 1203.

The embodiments of the present invention disclosed herein and shown in the drawings are merely specific examples provided to easily explain the technical details of the present invention and help the understanding of the present invention, and are not intended to limit the scope of the present invention. That is, it will be apparent to those skilled in the art that other modified embodiments are possible on the basis of the technical spirit of the present invention. Further, if necessary, the above respective embodiments may be employed in combination.

In the following description, the present disclosure is directed to the long term evolution (LTE) system and the LTE-advanced (LTE-A) system by way of example, but the present disclosure may be applied to any other communication system employing base station scheduling without making a special change thereto.

FIG. 13A and FIG. 13B illustrate a communication system to which the present disclosure is applied.

FIG. 13A shows a case where an LTE cell 1302 and an LAA cell 1303 coexist within one small-sized base station 1301 in a network, and a UE 1304 transmits and receives data with the base station through the LTE cell 1302 and LAA cell 1303. There is no limitation on the duplex scheme of the LTE cell 1302 or the LAA cell 1303. However, when the LTE cell 1302 is a Pcell, uplink transmission is transmitted only through the LTE cell 1302.

FIG. 13B shows that an LTE macro base station 1311 for widening coverage and a small-sized LAA base station 1312 for increasing data transmission capacity are installed in a network. There is no limitation on the duplex scheme of the LTE macro base station 1311 or the small-sized LAA base station 1312. However, when the LTE base station 1311 is a Pcell, uplink transmission is transmitted only through the LTE base station 1311. Here, it is assumed that the LTE base station 1311 and the LAA base station 1312 have an ideal backhaul network. Accordingly, rapid inter base station X2 communication is possible, and thus although uplink transmission is transmitted only to the LTE base station 1311, the LAA base station 1312 can receive the transmitted uplink information in real time from the LTE base station 1311 through X2 communication 1313.

Embodiments as proposed below may be applied to both the systems of FIG. 13A and FIG. 13B.

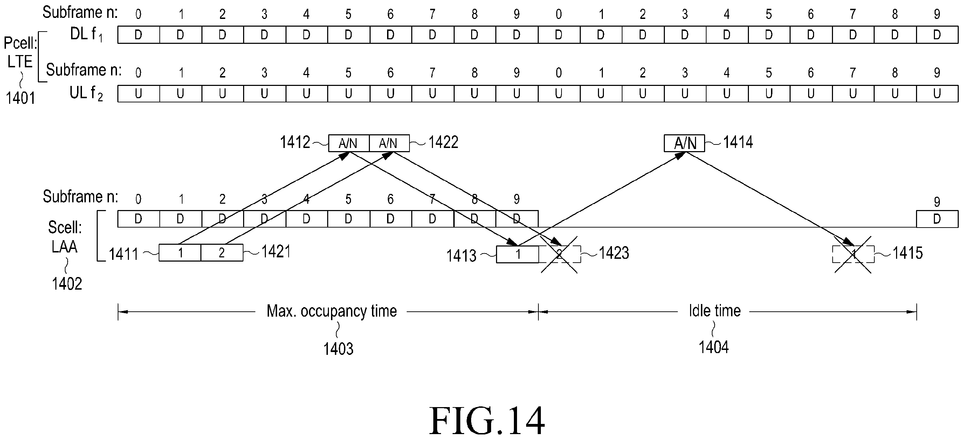

FIG. 14 is a view illustrating a downlink data retransmission scenario to be solved in the present disclosure.

When downlink data is retransmitted in an LAA cell, there is a problem in that the retransmission cannot be performed in an idle time, and this problem will be described through the HARQ operation illustrated in FIG. 14.

In FIG. 14, the Pcell is an LTE cell 1401 employing an FDD scheme. A frequency for downlink transmission is f1, and a frequency for uplink transmission is f2. The Scell is an LAA cell 1402 employing an FDD scheme, and only downlink transmission is illustrated in the LAA cell 1402. Although this description is based on only the FDD scheme, the description may be applied without any limitation on the duplex scheme.

A UE may acquire the downlink frequency f1 for the Pcell while performing cell search, and may acquire the uplink frequency f2 for the Pcell by receiving system information from an LTE base station. Further, the UE may acquire frequencies and channels for the Scell from an LTE base station or an LAA base station through higher layer information (higher layer signaling) or system information.

In FIG. 14, a PDSCH in the Scell 1402 that is the LAA cell may be scheduled through cross-carrier scheduling from the Pcell 1401 that is the LTE cell, or may also be scheduled through self-scheduling by the Scell 1402 that is the LAA cell.

When the PDSCH in the Scell 1402 that is the LAA cell is scheduled through cross-carrier scheduling from the Pcell 1401 that is the LTE cell, the UE may be configured, through an higher layer signal, to monitor (i.e., perform blind decoding) a PDCCH/ePDCCH for scheduling the PDSCH, which is transmitted in the Scell 1402 that is the LAA cell, in the Pcell 1401 that is the LTE cell.

When the PDSCH in the Scell 1402 that is the LAA cell is scheduled through self-scheduling from the Scell 1402 that is the LAA cell, the UE may be configured, through an higher layer signal, to monitor (i.e., perform blind decoding) a PDCCH/ePDCCH for scheduling the PDSCH, which is transmitted in the Scell 1402 that is the LAA cell, in the Scell 1402 that is the LAA cell.

When a PDSCH 1411 having HARQ process number 1 is transmitted in subframe #1 in the Scell 1402, an HARQ-ACK 1412 for the PDSCH 1411 is transmitted in a subframe after four subframes according to the uplink control channel transmission timing of the Pcell 1401 that is the LTE FDD cell (i.e., in uplink subframe #5 of the frequency f2 of the Pcell 1401).

The HARQ process number is transmitted to the UE through the DCI format of a PDCCH/ePDCCH. If the HARQ-ACK 1412 is negative-acknowledgement (NACK), then a PDSCH 1413 having HARQ process number 1 may be retransmitted in subframe #9 of the Scell 1402. As soon as the max. occupancy time 1403 of the Scell 1402 that is the LAA cell expires, the base station stops transmitting all signals in the Scell 1402 that is the LAA cell and enters an idle time 1404. During the idle time 204, a frequency channel corresponding to the LAA cell 1402 may be occupied by another system (Wi-Fi system or another LAA system), and the base station cannot use the frequency channel corresponding to the LAA cell 1402 for data transmission.

The start point and the end point or the start point and the length (duration) of the max. occupancy time 1403 may be previously configured by the base station, or the base station may also variably use them by sensing that there is no transmitted signal from another system in the LAA cell 1402. The UE may receive information on the start point and the end point or the start point and the length of the max. occupancy time 1403 from the base station through a layer 1 (L1) signal, an higher layer signal (higher layer signaling), or system information (e.g., SIB), or may also know the start point and the end point of the max. occupancy time 1403 through blind detection of a specific signal (e.g., synchronization signal such as CRS or PSS/SSS).

The start point and the end point or the start point and the length of the idle time 1404 may be previously configured by the base station, or the base station may also variably use them by sensing the existence of a transmitted signal from another system in the LAA cell 1402. The UE may receive information on the start point and the end point or the start point and the length of the idle time 1404 from the base station through an L1 signal, an higher layer signal, or system information, or may also know the start point and the end point of the idle time 1404 through blind detection of a specific signal (e.g., synchronization signal such as occupancy signal, specific preamble, specific signal, CRS, or PSS/SSS).

An HARQ-ACK 1414 for the PDSCH 1413 having HARQ process number 1 is transmitted in a subframe after four subframes according to the uplink control channel transmission timing of the Pcell 1401 that is the LTE FDD cell (i.e., in uplink subframe #3 of the frequency f2 of the Pcell 1401). Here, if the HARQ-ACK 1414 is a NACK, then a PDSCH 1415 having HARQ process number 1 should be transmitted in subframe #7 of the Scell 1402, but the PDSCH 1415 is in the idle time 1404 and thus is under a situation where it cannot be transmitted.

Further, when a PDSCH 1421 having HARQ process number 2 is transmitted in sub-frame #2 in the S cell 1402, an HARQ-ACK 1422 for the PDSCH 1421 is transmitted in a subframe after four subframes according to the uplink control channel transmission timing of the Pcell 1401 that is the LTE FDD cell (i.e., in uplink subframe #6 of the frequency f2 of the Pcell 1401). If the HARQ-ACK 1422 is a NACK, then a PDSCH 1423 having HARQ process number 2 is under a situation where it cannot be transmitted in subframe #0 of the Scell 1402, which is in the idle time 1404.

As described above, data transmission capacity decreases due to the PDSCHs that cannot be retransmitted in the LAA cell 1402, and the data transmission capacity is inversely proportional to the length of the idle time 1404.

<Embodiment 4>

A fourth embodiment is directed to a method for performing downlink data retransmission, which cannot be performed in an LAA cell employing a self-scheduling scheme, in an LTE cell by a base station and a UE. According to this embodiment, when data transmission is performed in an LAA cell, data that has not been completely transmitted can be retransmitted in an LTE cell.

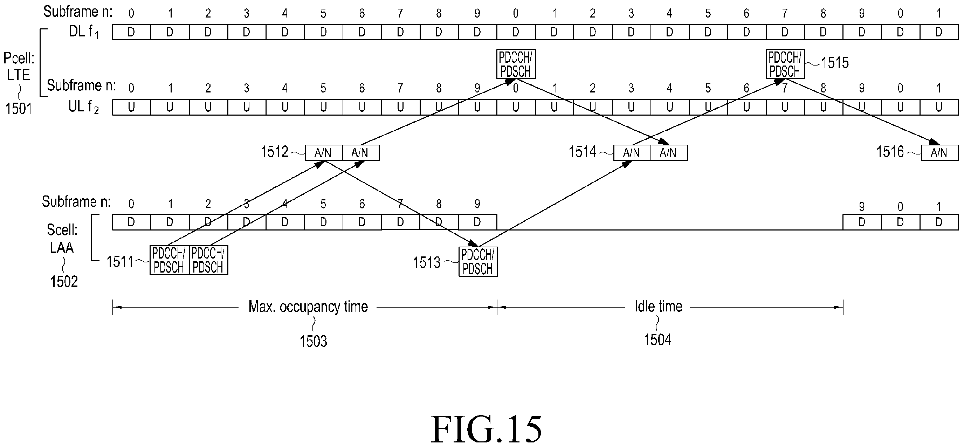

FIG. 15 illustrates a downlink data retransmission method according to the fourth embodiment of the present disclosure.

In FIG. 15, the Pcell is an LTE cell 1501 employing an FDD scheme. A frequency for downlink transmission is f1, and a frequency for uplink transmission is f2. The Scell is an LAA cell 1502 employing an FDD scheme, and only downlink transmission is illustrated in the LAA cell 1502. Although this description is based on only the FDD scheme, the description may be applied without any limitation on the duplex scheme.

A UE may acquire the downlink frequency f1 for the Pcell while performing cell search, and may acquire the uplink frequency f2 for the Pcell by receiving system information from an LTE base station. Further, the UE may acquire frequencies and channels for the Scell from an LTE base station or an LAA base station through higher layer information or system information.

In FIG. 15, a PDSCH in the Scell 1502 that is the LAA cell is scheduled through self-scheduling by the Scell 1502 that is the LAA cell.

The UE is configured, through an higher layer signal, to monitor (i.e., perform blind decoding) a PDCCH/ePDCCH for scheduling a PDSCH, which is transmitted in the Scell 1502 that is the LAA cell, in the Scell 1502 that is the LAA cell.

In FIG. 15, when retransmission of the PDSCH in the LAA cell 1502 is performed in the max. occupancy time 1503, the PDSCH is retransmitted in the LAA cell 1502, but when retransmission of the PDSCH in the LAA cell 1502 is performed in the idle time 1504, the PDSCH cannot be retransmitted in the LAA cell 1502, and thus is retransmitted in the Pcell that is the LTE cell 1501.

The start point and the end point or the start point and the length (duration) of the max. occupancy time 1503 may be previously configured by the base station, or the base station may also variably use them by sensing that there is no transmitted signal from another system in the LAA cell 1502. The UE may receive information on the start point and the end point or the start point and the length of the max. occupancy time 1503 from the base station through an L1 signal, an higher layer signal, or system information, or may also know the start point and the end point of the max. occupancy time 1503 through blind detection of a specific signal (e.g., synchronization signal such as CRS or PSS/SSS).

The start point and the end point or the start point and the length of the idle time 1504 may be previously configured by the base station, or the base station may also variably use them by sensing the existence of a transmitted signal from another system in the LAA cell 1502. The UE may receive information on the start point and the end point or the start point and the length of the idle time 1504 from the base station through an L1 signal, an higher layer signal, or system information, or may also know the start point and the end point of the idle time 1504 through blind detection of a specific signal (e.g., synchronization signal such as occupancy signal, specific preamble, specific signal, CRS, or PSS/SSS).

In FIG. 15, the base station schedules a PDSCH by transmitting a PDCCH/ePDCCH in downlink subframe #1 of the LAA cell 1502, and transmits the PDSCH 1511 in the same subframe #1. An HARQ-ACK 1512 for the PDSCH 1511 in subframe #1 is transmitted in a subframe after four subframes according to the uplink control channel transmission timing of the Pcell 1501 that is the LTE FDD cell (i.e., in uplink subframe #5 of the frequency f2 of the Pcell 1501) (1512). Here, the number of subframes is optionally defined as 4, and any other value may be applied. If the HARQ-ACK 1512 is a NACK, then PDSCH retransmission 1513 can be transmitted in subframe #9 of the LAA cell 1502 because the PDSCH retransmission is performed in the max. occupancy time (1513). An HARQ-ACK 1514 for the retransmission 1513 is transmitted in a subframe after four subframes according to the uplink control channel transmission timing of the Pcell 1501 that is the LTE FDD cell (i.e., in uplink subframe #3 of the frequency f2 of the Pcell 1501) (1514). If the HARQ-ACK 1514 is a NACK, then PDSCH retransmission 1515 cannot be transmitted in the LAA cell 1502 because the LAA cell 1502 is in the idle time 1504. Accordingly, in this embodiment, the PDSCH retransmission 1515 is performed in the Pcell that is the LTE cell 1501. Specifically, when the LAA cell 1502 is in the idle time 1504, the base station transmits a PDCCH/ePDCCH for scheduling the PDSCH 1515 of the LAA cell 1502 in the LTE cell 1501, and the UE performs monitoring of the PDCCH/ePDCCH for scheduling the PDSCH 1515 of the LAA cell 1502 in the LTE cell 1501 (though it is not the time to perform transmission and reception operations because the LAA cell is in the idle time).

In this situation, a PDCCH/ePDCCH having the same HARQ process number, which has been originally transmitted in the LTE cell 1501, may exist. Accordingly, there is a need for a method for preventing a collision between the PDCCH/ePDCCH for the PDSCH originally intended to be transmitted in the LAA cell 1502 and the PDCCH/ePDCCH originally transmitted in the LTE cell 1501. To this end, the following alternatives are proposed.

<Alternative 4-1> Identification of location of UE-specific search space when PDCCH/ePDCCH is transmitted in LTE cell

In alternative 4-1, when the base station transmits the PDCCH/ePDCCH for the PDSCH, which cannot be transmitted in the LAA cell 1502 because the LAA cell 1502 is in the idle time, in the LTE cell 1501, the base station may identify the location of a UE-specific search space. That is, when the base station transmits the PDCCH/ePDCCH for scheduling the PDSCH, which cannot be transmitted in the LAA cell 1502 (in spite of self-scheduling), in the LTE cell 1501, the base station may identify a UE-specific search space, in which the PDCCH/ePDCCH for scheduling the PDSCH of the LAA cell 1502 should be monitored, through an offset or a carrier indicator field (CIF). Specifically, the offset or CIF may be previously configured through an higher layer signal, or the UE-specific search space may also be identified using a serving cell index of the LAA cell 1502 configured by an higher layer signal, instead of the CIF.

<Alternative 4-2> Allocation of new RNTI when PDCCH/ePDCCH is transmitted in LTE cell

In alternative 4-2, when the base station transmits the PDCCH/ePDCCH, the base station may allocate a new RNTI thereto.

<Alternative 4-3> Use of new mask for CRC check when PDCCH/ePDCCH is transmitted in LTE cell

In alternative 4-3, when the base station transmits the PDCCH/ePDCCH, the base station may introduce a new mask so that the UE can identify the PDCCH/ePDCCH through cyclic redundancy check (CRC).

<Alternative 4-4> Use of 1 bit indicating scheduling of LAA cell

In alternative 4-4, when the base station transmits the PDCCH/ePDCCH, the base station may inform the UE of scheduling of the LAA cell by introducing an additional 1 bit in the PDCCH/ePDCCH, or may also inform the UE of scheduling of the LAA cell using one bit of the existing field in the PDCCH/ePDCCH.

Through at least one of alternatives 4-1 to 4-4, the PDSCH 1515 for the HARQ-ACK 1514 can be retransmitted in subframe #7 of the LTE cell 1501 (1515). The UE can recognizes that the PDSCH 1515 corresponds to retransmission that has not been transmitted in the LAA cell 1502, and may store the PDSCH 1515 in the corresponding buffer and perform decoding of the PDSCH 1515.

An HARQ-ACK 1516 for the PDSCH transmission 1515 in subframe #7 is transmitted in a subframe after four subframes according to the uplink control channel transmission timing of the Pcell 1501 that is the LTE FDD cell (i.e., in uplink subframe #1 of the frequency f2 of the Pcell 1501 ) (1516). Here, though the LAA cell 1502 is in the idle time, the UE performs PUCCH transmission for the HARQ-ACK transmission using a PUCCH format that is configured to enable HARQ-ACKs for the LTE cell and the LAA cell to be transmitted at once.

Although FIG. 15 has been described on the assumption that there are only one LAA cell and only one LTE cell, this embodiment may also be applied when there are a plurality of LAA cells and a plurality of LTE cells. When there are a plurality of LAA cells and a plurality of LTE cells, the LAA cells and LTE cells may be grouped such that PDSCH retransmission can be performed when the LAA cells are in an idle time, and grouping of the cells may be configured through an higher layer signal. Here, one LTE cell for performing PDSCH retransmission may be configured for at least one LAA cell, and the corresponding configuration information may be transmitted to the UE through an higher layer signal.

As shown in FIG. 15, even when the LAA cell that is an unlicensed band is in the idle time where PDSCH retransmission cannot be performed, the base station can transmit downlink data to the UE through retransmission in the LTE cell that is a licensed band, and the UE can successfully increase the decoding probability by chase-combining the retransmitted PDSCH with the original PDSCH. Therefore, even when the LAA cell is in the idle time, the base station can complete downlink data transmission, and can increase the system data transmission capacity.

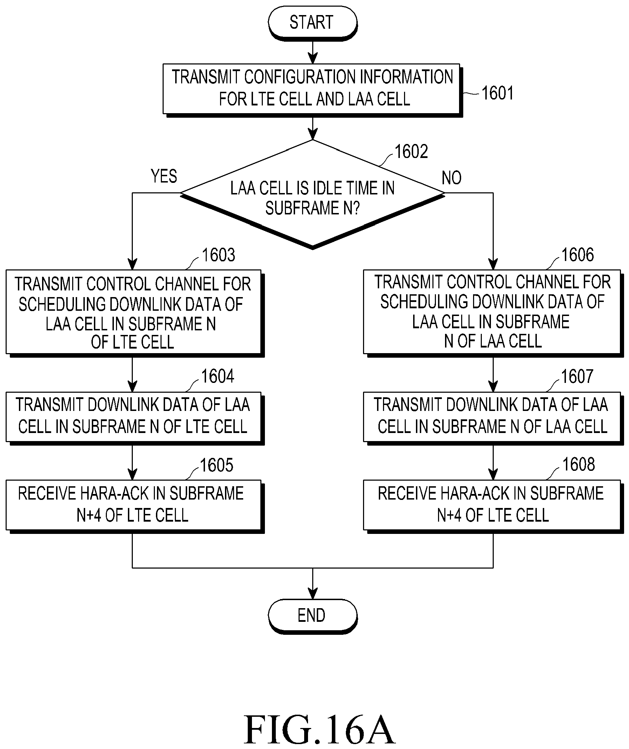

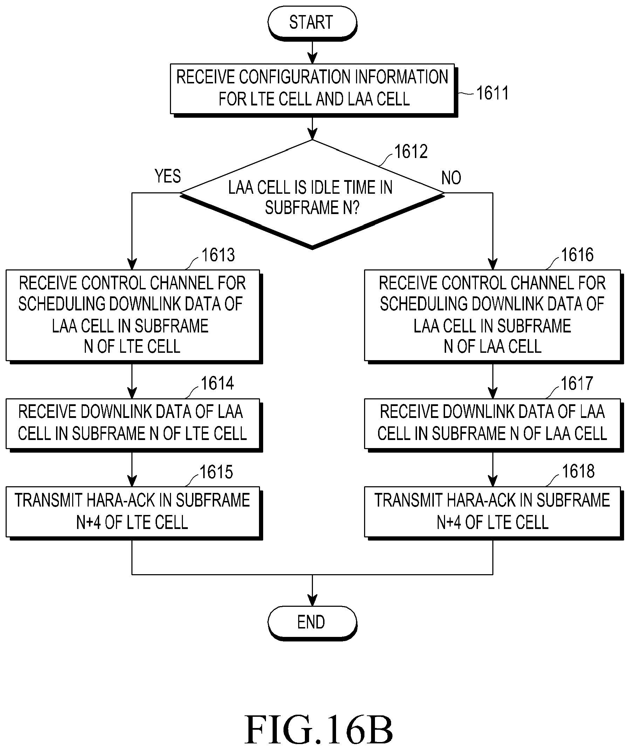

FIGS. 16A and 16B are flowcharts illustrating operations of a base station and a UE for a downlink data retransmission method according to the fourth embodiment of the present disclosure.

FIG. 16A shows an operation of a base station for performing downlink data retransmission in an LAA cell employing a self-scheduling scheme. Here, the base station may be either an LTE base station or an LAA base station.

In step 1601, a base station may transmit information on an LTE cell and an LAA cell to a UE, and may transmit PDCCH/ePDCCH configuration information in the LAA cell to the UE.

The information on the LTE cell and LAA cell may be uplink and downlink frequency information when the LTE cell or the LAA cell is an FDD cell, and may be UL-DL configuration information and special subframe configuration information when the LTE cell or the LAA cell is a TDD cell. The information on the LTE cell and the LAA cell may also include information on a max. occupancy time or idle time in the LAA cell. The information on the LTE cell and the LAA cell may be transmitted to the UE through system information or higher layer information.

The PDCCH/ePDCCH configuration information in the LAA cell may be configuration information required for the UE to monitor a PDCCH/ePDCCH for PDSCH transmission of the LAA cell in the LAA cell, or may be configuration information (e.g., cell indication information) required for the UE to monitor a PDSCH and a PDCCH/ePDCCH, which cannot be transmitted in the LAA cell during the idle time, in a specific LTE cell. The PDCCH/ePDCCH configuration information in the LAA cell may be transmitted to the UE through system information or higher layer information.

In step 1602, the base station may determine whether the LAA cell is in the idle time in subframe #n.

When the LAA cell is in the idle time in subframe #n, in step 1603, the base station may transmits a PDCCH/ePDCCh, which is a control channel for scheduling downlink data of the LAA cell, in downlink subframe #n of the LTE cell. Here, as described in FIG. 15, since a PDCCH/ePDCCH having the same HARQ process number, which has been originally transmitted in the LTE cell, may exist, the PDCCH/ePDCCH may be transmitted according to the alternative (4-1 to 4-4) for collision prevention. In step 1604, the base station may retransmit downlink data of the LAA cell in subframe #n of the LTE cell. In step 1605, the base station may receive an HARQ-ACK from the UE in uplink subframe #n+4 of the Pcell that is the LTE cell.

When the LAA cell is not in the idle time in subframe #n, in step 1606, the base station may transmit a PDCCH/ePDCCH, which is a control channel for scheduling downlink data of the LAA cell, in downlink subframe #n of the LAA cell. In step 1607, the base station may retransmit downlink data of the LAA cell in subframe #n of the LAA cell. In step 1608, the base station may receive an HARQ-ACK from the UE in uplink subframe #n+4 of the Pcell that is the LTE cell.

FIG. 16B shows an operation of a UE for performing downlink data retransmission in an LAA cell employing a self-scheduling scheme.

In step 1611, a UE may receive information on an LTE cell and an LAA cell from a base station, and may receive PDCCH/ePDCCH configuration information in the LAA cell from the base station.

The information on the LTE cell and LAA cell may be uplink and downlink frequency information when the LTE cell or the LAA cell is an FDD cell, and may be UL-DL configuration information and special subframe configuration information when the LTE cell or the LAA cell is a TDD cell. The information on the LTE cell and the LAA cell may also include information on a max. occupancy time or idle time in the LAA cell. The information on the LTE cell and the LAA cell may be received from the base station through system information or higher layer information.

The PDCCH/ePDCCH configuration information in the LAA cell may be configuration information required for the UE to monitor a PDCCH/ePDCCH for PDSCH transmission of the LAA cell in the LAA cell, or may be configuration information (e.g., cell indication information) required for the UE to monitor a PDSCH and a PDCCH/ePDCCH, which cannot be transmitted in the LAA cell during the idle time, in a specific LTE cell. The PDCCH/ePDCCH configuration information in the LAA cell may be received from the base station through system information or higher layer information.

In step 1612, the UE may determine whether the LAA cell is in the idle time in subframe #n.

When the LAA cell is in the idle time in subframe #n, in step 1613, the UE may monitor and receive a PDCCH/ePDCCh, which is a control channel for scheduling downlink data of the LAA cell, in downlink subframe #n of the LTE cell. Here, as described in FIG. 15, since a PDCCH/ePDCCH having the same HARQ process number, which has been originally transmitted in the LTE cell, may exist, the PDCCH/ePDCCH may be received according to the alternative (4-1 to 4-4) for collision prevention. In step 1614, the UE may receive downlink data of the LAA cell in subframe #n of the LTE cell. In step 1615, the UE may transmit an HARQ-ACK to the base station in uplink subframe #n+4 of a Pcell that is the LTE cell.

When the LAA cell is not in the idle time in subframe #n, in step 1616, the UE may monitor and receive a PDCCH/ePDCCH, which is the control channel for scheduling downlink data of the LAA cell, in downlink subframe #n of the LAA cell. In step 1617, the UE may receive downlink data of the LAA cell in subframe #n of the LAA cell. In step 1618, the UE may transmit an HARQ-ACK to the base station in uplink subframe #n+4 of the Pcell that is the LTE cell.

<Embodiment 5>

A fifth embodiment is directed to a method for performing downlink data retransmission, which cannot be performed in an LAA cell employing a cross carrier scheduling scheme, in an LTE cell by a base station and a UE.

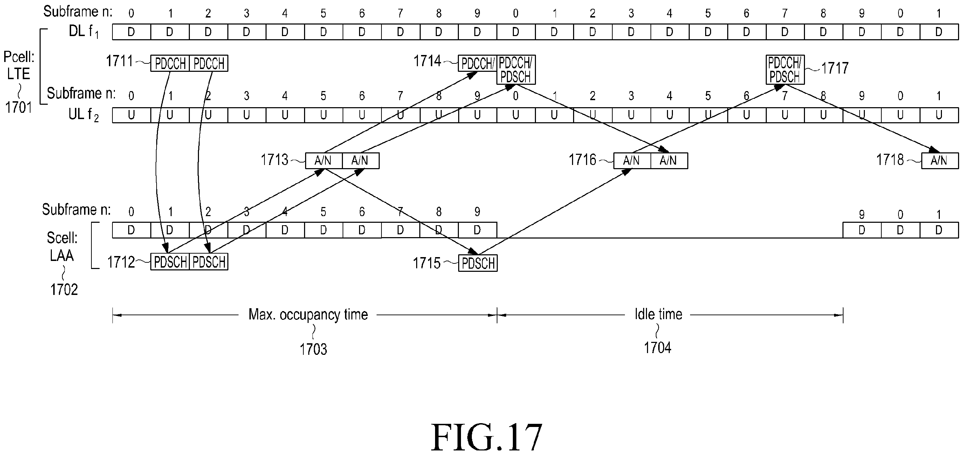

FIG. 17 illustrates a downlink data retransmission method according to the fifth embodiment of the present disclosure.

In FIG. 17, the Pcell is an LTE cell 1701 employing an FDD scheme. A frequency for downlink transmission is f1, and a frequency for uplink transmission is f2. The Scell is an LAA cell 1702 employing an FDD scheme, and only downlink transmission is illustrated in the LAA cell 1702. Although this description is based on only the FDD scheme, the description may be applied without any limitation on the duplex scheme.

A UE may acquire the downlink frequency f1 for the Pcell while performing cell search, and may acquire the uplink frequency f2 for the Pcell by receiving system information from an LTE base station. Further, the UE may acquire frequencies and channels for the Scell from an LTE base station or an LAA base station through higher layer information or system information.

In FIG. 17, a PDSCH in the Scell 1702 that is the LAA cell is scheduled through cross carrier scheduling by the Pcell 1701 that is the LTE cell.

The UE is configured, through an higher layer signal, to monitor a PDCCH/ePDCCH for scheduling a PDSCH, which is transmitted in the Scell 1702 that is the LAA cell, in the Pcell 1701 that is the LTE cell.

In FIG. 17, when retransmission of the PDSCH in the LAA cell 1702 is performed in the max. occupancy time 1703, the PDSCH is retransmitted in the LAA cell 1702, but when retransmission of the PDSCH in the LAA cell 1702 is performed in the idle time 1704, the PDSCH cannot be retransmitted in the LAA cell 1702, and thus is retransmitted in the Pcell that is the LTE cell 1701.

The start point and the end point or the start point and the length (duration) of the max. occupancy time 1703 may be previously configured by the base station, or the base station may also variably use them by sensing that there is no transmitted signal from another system in the LAA cell 1702. The UE may receive information on the start point and the end point or the start point and the length of the max. occupancy time 1703 from the base station through an L1 signal, an higher layer signal, or system information, or may also know the start point and the end point of the max. occupancy time 1703 through blind detection of a specific signal (e.g., synchronization signal such as CRS or PSS/SSS).

The start point and the end point or the start point and the length of the idle time 1704 may be previously configured by the base station, or the base station may also variably use them by sensing the existence of a transmitted signal from another system in the LAA cell 1702. The UE may receive information on the start point and the end point or the start point and the length of the idle time 1704 from the base station through an L1 signal, an higher layer signal, or system information, or may also know the start point and the end point of the idle time 1704 through blind detection of a specific signal (e.g., synchronization signal such as occupancy signal, specific preamble, specific signal, CRS, or PSS/SSS).

In FIG. 17, the base station schedules a PDSCH of the LAA cell 1702 by transmitting a PDCCH/ePDCCH 1711 in downlink subframe #1 of the LTE cell 1701, and transmits the PDSCH 1712 in the same subframe #1 of the LAA cell 1702. An HARQ-ACK 1713 for the PDSCH 1712 in subframe #1 of the LAA cell 1702 is transmitted in a subframe after four subframes according to the uplink control channel transmission timing of the Pcell 1701 that is the LTE FDD cell (i.e., in uplink subframe #5 of the frequency f2 of the Pcell 1701). If the HARQ-ACK 1713 is a NACK, then the PDSCH 1715 can be retransmitted in subframe #9 of the LAA cell 1702 because the PDSCH retransmission is performed in the max. occupancy time 1703. That is, the base station schedules PDSCH retransmission 1715 of the LAA cell 1702 by transmitting a PDCCH/ePDCCH 1714 in subframe #9 of the LTE cell 1701, and transmits the PDSCH 1715 in the same subframe #9 of the LAA cell 1702. An HARQ-ACK 1714 for the retransmission 1715 is transmitted in a subframe after four subframes according to the uplink control channel transmission timing of the Pcell 1701 that is the LTE FDD cell (i.e., in uplink subframe #3 of the frequency f2 of the Pcell 1701) (1717). If the HARQ-ACK 1716 is a NACK, then PDSCH retransmission 1717 cannot be transmitted in the LAA cell 1702 because the LAA cell 1702 is in the idle time 1704. Accordingly, in this embodiment, the PDSCH retransmission 1717 is performed in the Pcell that is the LTE cell 1701. Specifically, when the LAA cell 1702 is in the idle time 1704, the base station transmits a PDCCH/ePDCCH for scheduling the PDSCH 1717 of the LAA cell 1702 in the LTE cell 1701,.and the UE performs monitoring of the PDCCH/ePDCCH for scheduling the PDSCH 1717 of the LAA cell 1702 in the LTE cell 1701 that is a cell for scheduling the LSAA cell 1702 (though it is not the time to perform transmission and reception operations because the LAA cell is in the idle time).

Here, a UE-specific search space for a PDCCH/ePDCCH for scheduling a PDSCH of the LAA cell and a UE-specific search space for a PDCCH/ePDCCH for scheduling a PDSCH of the LTE cell may be basically identified by a search space offset on the basis of a CIF value. Accordingly, even when the PDCCHs/ePDCCHs have the same HARQ process number, there is no collision as in the case of self-scheduling (e.g., FIG. 15). Further, although the base station performs the PDSCH retransmission 1717 of the LAA cell 1702 in the LTE cell 1701, the serving cell index of the LAA cell 1702 is maintained in the CIF field of the PDCCH/ePDCCH for scheduling the PDSCH retransmission 1717 of the LAA cell 1702. This is because, when the UE-specific search space for the LTE cell 1701 and the UE-specific search space for the LAA cell 1702 overlap or the PDCCHs/ePDCCHs have the same information bit size, the UE can identify them through the CIF field.

In this way, the PDSCH retransmission 1717 for the HARQ-ACK 1716 may be transmitted in subframe #7 of the LTE cell 1701. The UE can recognize, through the CIF field, that the PDSCH 1717 is retransmission that has not been transmitted in the LAA cell 1702, and may store the PDSCH 1717 in the corresponding buffer and perform decoding of the PDSCH 1717. Next, an HARQ-ACK 1718 for the PDSCH 1717 transmitted in subframe #7 is transmitted in a subframe after four subframes according to the uplink control channel transmission timing of the Pcell 1701 that is the LTE FDD cell (i.e., in uplink subframe #1 of the frequency f2 of the Pcell 1701) (1718). Here, though the LAA cell 1702 is in the idle time, PUCCH transmission for the HARQ-ACK transmission 1718 is performed using a PUCCH format that is configured to enable HARQ-ACKs for the LTE cell and the LAA cell to be transmitted at once.

Although FIG. 17 has been described on the assumption that there are only one LAA cell and only one LTE cell, this embodiment may also be applied when there are a plurality of LAA cells and a plurality of LTE cells. When there are a plurality of LAA cells and a plurality of LTE cells, the LAA cells and LTE cells may be grouped such that PDSCH retransmission can be performed when the LAA cells are in an idle time, and grouping of the cells may be configured through an higher layer signal. Here, one LTE cell for performing PDSCH retransmission may be configured for at least one LAA cell, and the corresponding configuration information may be transmitted to the UE through an higher layer signal.

As shown in FIG. 17, even when the LAA cell that is an unlicensed band is in the idle time where PDSCH retransmission cannot be performed, the base station can transmit downlink data to the UE through retransmission in the LTE cell that is a licensed band, and the UE can successfully increase the decoding probability by chase-combining the retransmitted PDSCH with the original PDSCH. Therefore, even when the LAA cell is in the idle time, the base station can complete downlink data transmission, and can increase the system data transmission capacity.

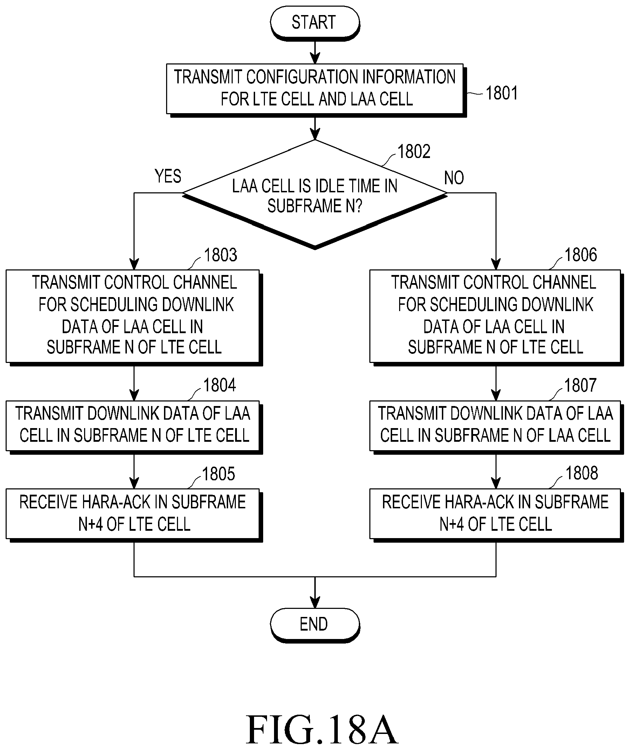

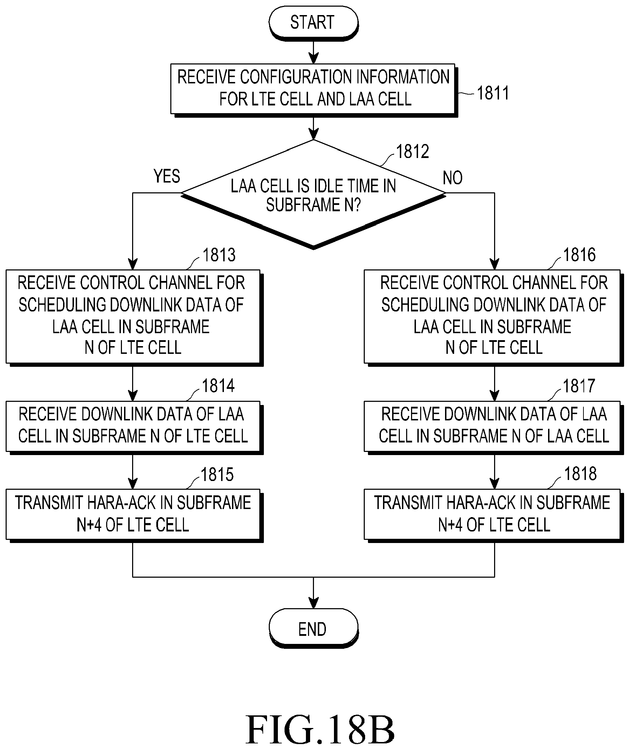

FIGS. 18A and 18B are flowcharts illustrating operations of a base station and a UE for a downlink data retransmission method according to the fifth embodiment of the present disclosure.

FIG. 18A shows an operation of a base station for performing downlink data retransmission in an LAA cell employing a cross carrier scheduling scheme. Here, the base station may be either an LTE base station or an LAA base station.

In step 1801, a base station may transmit information on an LTE cell and an LAA cell to a UE, and may transmit PDCCH/ePDCCH configuration information in the LAA cell to the UE.

The information on the LTE cell and LAA cell may be uplink and downlink frequency information when the LTE cell or the LAA cell is an FDD cell, and may be UL-DL configuration information and special subframe configuration information when the LTE cell or the LAA cell is a TDD cell. The information on the LTE cell and the LAA cell may also include information on a max. occupancy time or idle time in the LAA cell. The information on the LTE cell and the LAA cell may be transmitted to the UE through system information or higher layer information.

The PDCCH/ePDCCH configuration information in the LAA cell may be configuration information required for the UE to monitor a PDCCH/ePDCCH for PDSCH transmission of the LAA cell in the LTE cell, or may be configuration information (e.g., cell indication information) required for the UE to monitor a PDSCH and a PDCCH/ePDCCH, which cannot be transmitted in the LAA cell during the idle time, in a specific LTE cell. The PDCCH/ePDCCH configuration information in the LAA cell may be transmitted to the UE through system information or higher layer information.

In step 1802, the base station may determine whether the LAA cell is in the idle time in subframe #n.

When the LAA cell is in the idle time in subframe #n, in step 1803, the base station may transmits a PDCCH/ePDCCh, which is a control channel for scheduling downlink data of the LAA cell, in downlink subframe #n of the LTE cell. Here, as described in FIG. 17, since the LTE cell and the LAA cell have PDCCH/ePDCCH monitoring regions separated by UE-specific search spaces, there is no problem of a collision between PDCCHs/ePDCCHs having the same HARQ process number. In step 1804, the base station may retransmit downlink data of the LAA cell in subframe #n of the LTE cell. In step 1805, the base station may receive an HARQ-ACK from the UE in uplink subframe #n+4 of the Pcell that is the LTE cell.

When the LAA cell is not in the idle time in subframe #n, in step 1806, the base station may transmit a PDCCH/ePDCCH, which is a control channel for scheduling downlink data of the LAA cell, in downlink subframe #n of the LTE cell. In step 1807, the base station may retransmit downlink data of the LAA cell in subframe #n of the LAA cell. In step 1808, the base station may receive an HARQ-ACK from the UE in uplink subframe #n+4 of the Pcell that is the LTE cell.

FIG. 18B shows an operation of a UE for performing downlink data retransmission in an LAA cell employing a cross carrier scheduling scheme.

In step 1811, a UE may receive information on an LTE cell and an LAA cell from a base station, and may receive PDCCH/ePDCCH configuration information in the LAA cell from the base station.

The information on the LTE cell and LAA cell may be uplink and downlink frequency information when the LTE cell or the LAA cell is an FDD cell, and may be UL-DL configuration information and special subframe configuration information when the LTE cell or the LAA cell is a TDD cell. The information on the LTE cell and the LAA cell may also include information on a max. occupancy time or idle time in the LAA cell. The information on the LTE cell and the LAA cell may be received from the base station through system information or higher layer information.

The PDCCH/ePDCCH configuration information in the LAA cell may be configuration information required for the UE to monitor a PDCCH/ePDCCH for PDSCH transmission of the LAA cell in the LTE cell, or may be configuration information (e.g., cell indication information) required for the UE to monitor a PDSCH and a PDCCH/ePDCCH, which cannot be transmitted in the LAA cell during the idle time, in a specific LTE cell. The PDCCH/ePDCCH configuration information in the LAA cell may be received from the base station through system information or higher layer information.

In step 1812, the UE may determine whether the LAA cell is in the idle time in subframe #n.

When the LAA cell is in the idle time in subframe #n, in step 1813, the UE may monitor and receive a PDCCH/ePDCCh, which is a control channel for scheduling downlink data of the LAA cell, in downlink subframe #n of the LTE cell. Here, as described in FIG. 17, since the LTE cell and the LAA cell have PDCCH/ePDCCH monitoring regions separated by UE-specific search spaces, there is no problem of a collision between PDCCHs/ePDCCHs having the same HARQ process number. In step 1814, the UE may receive downlink data of the LAA cell in subframe #n of the LTE cell. In step 1815, the UE may transmit an HARQ-ACK to the base station in uplink subframe #n+4 of a Pcell that is the LTE cell.

When the LAA cell is not in the idle time in subframe #n, in step 1816, the UE may monitor and receive a PDCCH/ePDCCH, which is the control channel for scheduling downlink data of the LAA cell, in downlink subframe #n of the LTE cell. In step 1817, the UE may receive downlink data of the LAA cell in subframe #n of the LAA cell. In step 1818, the UE may transmit an HARQ-ACK to the base station in uplink subframe #n+4 of the Pcell that is the LTE cell.

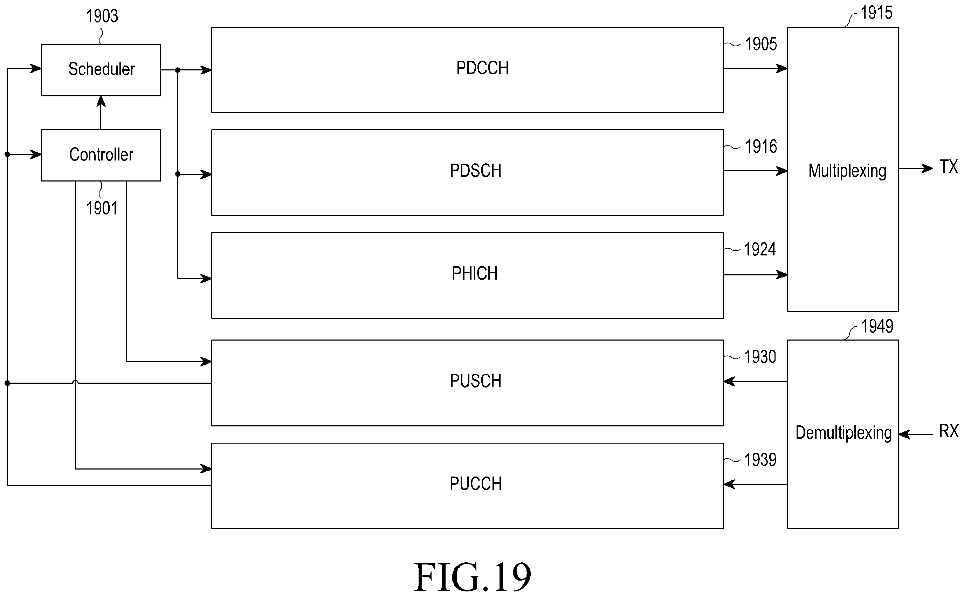

FIG. 19 illustrates a configuration of a base station apparatus according to some embodiments of the present disclosure.

As an example, the base station apparatus of FIG. 19 may perform the fourth embodiment or the fifth embodiment of the present disclosure.

Here, the base station may be either an LTE base station or an LAA base station. Referring to FIG. 19, the base station apparatus may include a transmitter, a receiver, and a controller 1901. The transmitter may include at least one of a PDCCH block 1905, a PDSCH block 1916, a PHICH block 1924, and a multiplexer 1915. The receiver may include at least one of a PUSCH block 1930, a PUCCH block 1939, and a demultiplexer 1949. The controller 1901 may control data retransmission, UL HARQ-ACK transmission/reception timing after data retransmission, an HARQ-ACK payload size, and a PUCCH transmission format. The base station apparatus may further include a scheduler 1903.

Here, the data retransmission may include all the methods described in the fourth and fifth embodiments of the present disclosure, in which, when PDSCH retransmission in an LA cell is impossible because the LAA cell is in an idle time, the retransmission is performed in an LTE cell. For transmissions/receptions in a plurality of cells, there may be a plurality of transmitters and a plurality of receivers (except the PUCCH block), but only one transmitter and only one receiver are illustrated in the drawing for the convenience of description.

The controller 1901, which controls data retransmission, UL HARQ-ACK transmission/reception timing after data retransmission, an HARQ-ACK payload size, and a PUCCH transmission format, may adjust timing relationships between physical channels for a UE to be scheduled by making reference to the amount of data to be transmitted to the UE, the amount of available resources within the system, and the like, and may inform the scheduler 1903, the PDCCH block 1905, the PDSCH block 1916, the PHICH block 1924, the PUSCH block 1930, and the PUCCH block 1939 of the timing relationships. The control of the data retransmission, the UL HARQ-ACK transmission/reception timing after data retransmission, the HARQ-ACK payload size, and the PUCCH transmission format follows the methods described in particular embodiments of the present disclosure.

As described in particular embodiments of the present disclosure, the PDCCH block 1905 configures control information under the control of the scheduler 1903 in order to perform PDSCH retransmission in an LTE cell, and the control information is multiplexed with other signals in the multiplexer 1915.

As described in particular embodiments of the present disclosure, the PDCCH block 1916 generates data under the control of the scheduler 1903 in order to perform PDSCH retransmission in an LTE cell, and the data is multiplexed with other signals in the multiplexer 1915.

The PHICH block 1924 generates an HARQ-ACK for PUSCH transmission, that is, an HARQ ACK/NACK for a PUSCH received from a UE, under the control of the scheduler 1903. The HARQ ACK/NACK is multiplexed with other signals in the multiplexer 1915.

Further, the multiplexed signals are generated into an OFDM signal, and the OFDM signal is transmitted to a UE.

In the receiver, the PUSCH block 1930 acquires PUSCH data for a signal received from a UE. The PUSCH block 1930 notifies the scheduler 1903 of whether there is an error in the result of decoding the PUSCH data so as to control downlink HARQ ACK/NACK generation, and provides whether there is an error in the decoding result to the controller 1901 so as to control downlink HARQ ACK/NACK transmission timing.

When PDSCH retransmission is performed in an LTE cell as described in particular embodiments of the present invention, the PUCCH block 1930 acquires an uplink ACK/NACK or a CQI from a signal received from a UE on the basis of PUCCH transmission timing, or from a signal received from a UE through the HARQ-ACK payload size and the PUCCH format. The acquired uplink ACK/NAK or CQI is provided to the scheduler 1903 so as to be used for determining whether to retransmit the PDSCH and determining a modulation and coding scheme (MCS). Further, the acquired uplink ACK/NACK is provided to the controller 1901 so as to control the transmission timing of the PDSCH.

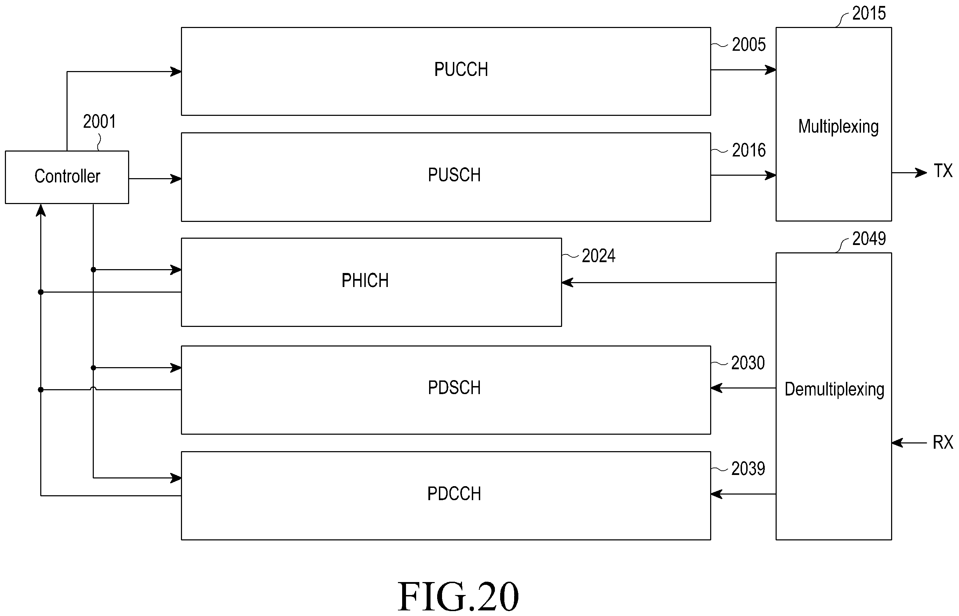

FIG. 20 illustrates a UE apparatus according to some embodiments of the present disclosure.

As an example, the UE apparatus of FIG. 20 may perform the fourth and fifth embodiments of the present disclosure.

The UE apparatus may include a transmitter, a receiver, and a controller 2001. The transmitter may include at least one of a PUCCH block 2005, a PUSCH block 2016, and a multiplexer 2015. The receiver may include at least one of a PHICH block 2024, a PDSCH block 2030, and a demultiplexer 2049. The controller 2001 may control data retransmission, UL HARQ-ACK transmission/reception timing after data retransmission, an HARQ-ACK payload size, and a PUCCH transmission format.

Here, all the methods described in the fourth and fifth embodiments of the present disclosure, in which, when PDSCH retransmission in an LA cell is impossible because the LAA cell is in an idle time, the retransmission is performed in an LTE cell. For transmissions/receptions in a plurality of cells, there may be a plurality of transmitters and a plurality of receivers (except the PUCCH block), but only one transmitter and only one receiver are illustrated in the drawing for the convenience of description.

The controller 2001, which controls data retransmission, UL HARQ-ACK transmission/reception timing after data retransmission, an HARQ-ACK payload size, and a PUCCH transmission format, informs the PDSCH block 2030, the PDCCH block 2039, the PUCCH block 2005, and the PUSCH block 2016 of the data retransmission, the UL HARQ-ACK transmission/reception timing after data retransmission, the HARQ-ACK payload size, and the PUCCH transmission format. The control of the data retransmission, the UL HARQ-ACK transmission/reception timing after data retransmission, the HARQ-ACK payload size, and the PUCCH transmission format follows the methods described in particular embodiments of the present disclosure. The PUCCH block 2005 configures an HARQ ACK/NACK or a CQI as uplink control information (UCI) under the control of the controller 2001 that controls storage of downlink data in a soft buffer. The HARQ ACK/NACK or CQI is multiplexed with other signals in the multiplexer 2015, and is transmitted to a base station according to a PUCCH transmission method and a PUCCH transmission format determined after data retransmission according to embodiments of the present disclosure.

The PUSCH block 2016 extracts data to be transmitted, and the extracted data is multiplexed with other signals in the multiplexer 2015. Further, the multiplexed signals are generated into a single carrier-frequency division multiple access (SC-FDMA) signal, and the SC-FDMA signal is transmitted to a base station by considering DL/UL HARQ-ACK transmission/reception timing.

In the receiver, the PHICH block 2042 separates, through the demultiplexer 2049, a PHICH signal from a signal received from a base station according to DL/UL HARQ-ACK transmission/reception timing, and then acquires whether there is an HARQ ACK/NACK for a PUSCH.

The PDSCH block 2030 separates, through the demultiplexer 2049, a PDSCH signal from a signal received from the base station by the data retransmission methods according to embodiments of the present disclosure, acquires PDSCH data, notifies the PUCCH block 2005 of whether there is an error in the result of decoding the data so as to control uplink HARQ ACK/NACK generation, and provides whether there is an error in the decoding result to the controller 2001 so as to control the timing when an uplink HARQ ACK/NACK is transmitted.

The PDCCH block 2039 separates a PDCCH signal through the demultiplexer 2049 in order to perform data retransmission according to embodiments of the present disclosure, and then performs decoding of a DCI format so as to acquire a DCI from the decoded signal.

In the following description, the present disclosure is directed to the definition of a CSI measurement and reporting operation of a low-cost UE that has a limitation on the maximum processable bandwidth within the entire channel bandwidth or the system transmission bandwidth and to a specific method for operating both a normal LTE UE and a low-cost UE in the same system.

FIG. 21 conceptually shows measurement bandwidths for a wideband CSI and a subband CSI applied when a normal LTE UE performs CSI reporting.

A UE measures CSI by making reference to a CRS or CSI-RS transmitted by a base station, wherein the CSI may be divided into wideband CSI and subband CSI according to its measurement bandwidth. The base station configures the UE as to whether to report wideband CSI or subband CSI, and notifies the UE of the configuration.

The measurement bandwidth 2106 of wideband CSI is identical to the system transmission bandwidth 2102. The measurement bandwidth 2104 of subband CSI is determined by the system transmission bandwidth. K RBs constituting a subband are consecutive to each other on the frequency axis, and the system transmission bandwidth $( N_{\text{RB}}^{\text{DL}} )$ may include a total of $N = \left\lceil N_{\text{RB}}^{\text{DL}} / k \right\rceil$ subbands.

[Table 2]

| System Bandwidth $N_{\text{RB}}$ | Subband Size ($k$) |
|---|---|
| 6 - 7 | NA |
| 8 - 10 | 4 |
| 11 - 26 | 4 |
| 27 - 63 | 6 |
| 64 - 110 | 8 |

Table 2 shows an example of the relationship between a measurement bandwidth for subband CSI measurement and the system transmission bandwidth.

For example, in the LTE system having a 20MHz channel bandwidth, the transmission bandwidth includes 100 RBs according to Table 1, and thus the subband size k is 8 on the basis of Table 2. Accordingly, the transmission bandwidth of 100 RBs includes a total of 13(=|00/8|) subbands.

Subband indexes are applied in ascending order in the frequency domain, and when there is no integer multiple relationship between the transmission bandwidth and the subband size, some subband sizes may be different from k determined by Table 2. FIG. 21 illustrates an example where the system transmission bandwidth includes N subbands 2108 (subband #0 ~ subband #N-1), and each subband includes k consecutive RBs.

In the case of a UE configured by a base station to report wideband CSI, the UE performs CSI measurement for the entire system transmission bandwidth, configures CSI, and then feeds back the CSI to the base station. In the case of a UE configured by the base station to report subband CSI, the UE may follow one of the following options. Further, which option the UE should follow may be configured by the base station.

- Option 1 (Higher layer-configured subband feedback): A UE performs subband CSI measurement for each of N subbands constituting the system transmission bandwidth, configures subband CSI, and then feeds back the subband CSI to a base station.
- Option 2 (UE-selected subband feedback): A UE selectively configures subband CSI for M subbands that have good CSI measurement results among N subbands constituting the system transmission bandwidth (M<N), and feeds back the subband CSI to a base station. Here, M may be determined according to the system transmission bandwidth.

When a UE reports subband CSI according to option 1 or option 2, the UE may report wideband CSI together. Compared to the wideband CSI, the subband CSI can provide detailed channel state information for each subband to the base station, but signaling overhead is relatively large. Among the subband CSI reporting methods, option 2 has relatively smaller signaling overhead than option 1.

A specific CSI reporting operation of a low-cost UE, the maximum processable bandwidth of which is smaller than the entire channel bandwidth or the transmission bandwidth, has not been yet defined. Therefore, there is a need to define a CSI reporting method for a low-cost UE in the LTE system employing the CSI reporting operation.

Hereinafter, the maximum frequency bandwidth processable by a low-cost UE will be referred to as "low-cost subband", "subband", or "narrowband".

The size of a "low-cost subband" cannot be larger than the system transmission bandwidth, and is assumed as 1.4MHz (6 RBs) that is the minimum transmission bandwidth generally supported by the LTE system. Since, unlike a normal LTE UE, a bandwidth processable by a low-cost UE at any moment is limited to a "low-cost subband", a wideband CSI reporting method in which CSI information for the entire system transmission bandwidth should be indicated cannot be applied as it is. Even in the case of a subband CSI reporting method, a specific subband CSI reporting method for a low-cost UE is required when the subband size defined by Table 2 is different from the size of a low-cost subband.

<Embodiment 6>

A sixth embodiment of the present disclosure is directed to a method for previously configuring a subband where a low-cost UE operates and operating the subband within the system transmission bandwidth.

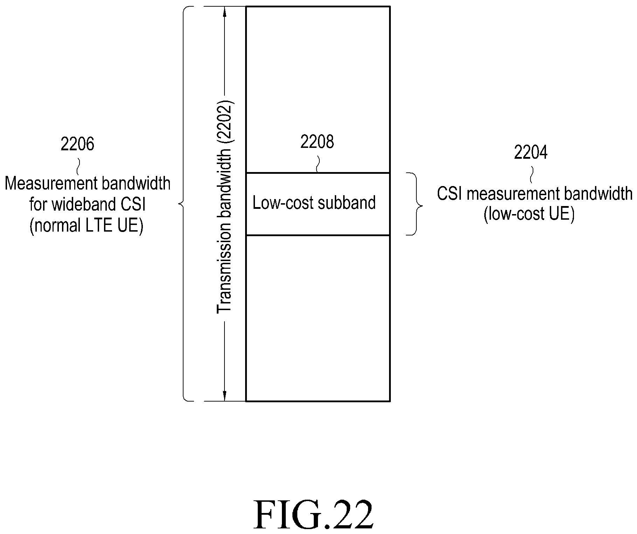

FIG. 22 is a conceptual view illustrating a CSI reporting method when one subband where a low-cost UE operates is configured and operated within the system transmission bandwidth.

FIG. 22 shows an example where a low-cost subband 2208 is located in the middle within the system transmission bandwidth 2202. A base station may previously notifies a UE of low-cost subband-related information on the location of the low-cost subband 2208, the number of low-cost subbands, etc. through signaling. In the example of FIG. 22, the measurement bandwidth 2204 of CSI measured and reported by the low-cost UE cannot exceed the low-cost subband 2208 that is the maximum processable bandwidth of the low-cost UE.

When the low-cost UE is configured by the base station to perform wideband CSI reporting, the low-cost UE does not perform CSI measurement (2206) for the entire system transmission bandwidth 2202, but may measure CSI for the low-cost subband 2208 (2204) and then perform CSI reporting to the base station. Alternatively, for the low-cost UE (unlike the normal LTE UE), the base station may define a single CSI reporting mode for a low-cost UE without distinguishing between wideband CSI reporting and subband CSI reporting. The CSI measurement bandwidth of the single CSI reporting mode for a low-cost UE may be a low-cost subband.

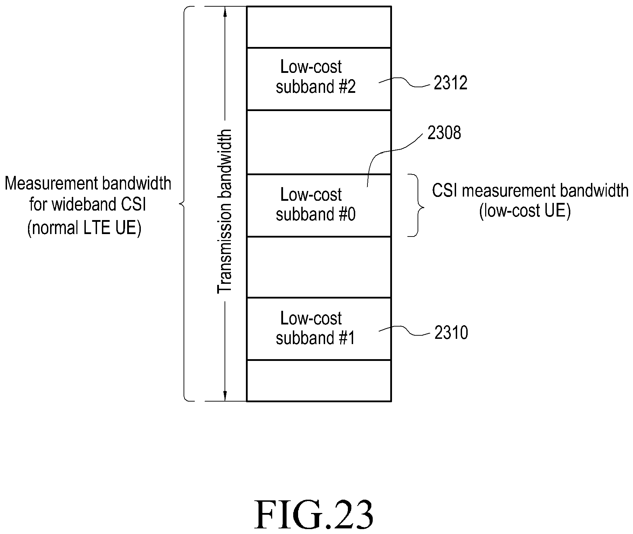

FIG. 23 is a conceptual view illustrating a CSI reporting method when a plurality of subbands where a low-cost UE operates are configured and operated within the system transmission bandwidth.

Since a low-cost subband is a relatively narrow band, there may be a limitation on the number of low-cost UEs that can be supported through one subband. When the number of low-cost UEs that should be supported in a system increases, a number of low-cost UEs can be simultaneously serviced by configuring and operating a plurality of subbands.

A low-cost UE performs a transmission/reception operation of data or a control signal through one low-cost subband at any moment.

When a base station configures and operates a plurality of low-cost subbands within the system transmission bandwidth, the base station may assign a specific low-cost subband for which a UE should perform CSI reporting, and may notify the UE of the assigned low-cost subband.

In FIG. 23, as in the case of FIG. 3, the CSI measurement bandwidth of a low-cost UE may be a low-cost subband, and a base station may define different CSI reporting points corresponding to each low-cost subband and may allow CSI for a plurality of configured low-cost subbands to be reported to the base station after a predetermined time elapses. For example, a low-cost UE may measures CSI for low-cost subband #0 2308 and report the CSI to a base station in subframe #0, may change the reception frequency to low-cost subband #1 2310, measure CSI for low-cost subband #1 2310, and report the CSI to the base station in subframe #1, and may change the reception frequency to low-cost subband #2 2312, measure CSI for low-cost subband #2 2312, and report the CSI to the base station in subframe #2. As another example, the low-cost UE does not transmit all of the CSI measurement result for subband #0 2308, the CSI measurement result for subband #1 2310, and the CSI measurement result for subband #2 2312, but may transmit an average value obtained by averaging the three results.

Information on a CSI transmission point for each low-cost subband may be notified to the UE by the base station through signaling, or the UE may define a function relationship between the index of a low-cost subband and a CSI reporting transmission period and calculate information on a CSI transmission point for each low-cost subband using the defined function relationship. Alternatively, the UE may perform CSI reporting in connection with the most recently scheduled low-cost subband. If the low-cost subband most recently scheduled to the UE is low-cost subband #1 2310, then the UE may report CSI for low-cost subband #1 2310 at the next CSI transmission point. In this way, the number of changes in the frequency of the low-cost UE can be minimized as much as possible, and thus the reception complexity of the UE and power consumption caused by the frequency change operation can be reduced.

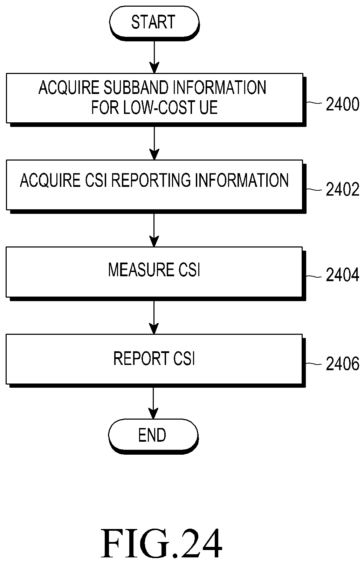

FIG. 24 illustrates a CSI reporting procedure of a low-cost UE according to the sixth embodiment of the present disclosure.

In step 2400, a low-cost UE acquires configuration information for low-cost subbands from a base station. The low-cost subband configuration information may include at least some of information on the locations of low-cost subbands, information on the number of low-cost subbands, and information indicating for which low-cost subband the low-cost UE should perform CSI reporting. The configuration information for low-cost subbands may be included in a master information block (MIB), may be included in a system information block (SIB) for a low-cost UE, or may be included in RRC signaling for a low-cost UE.

In step 2402, the low-cost UE acquires CSI reporting-related information from the base station. The CSI reporting-related information may include at least some of information on a CSI reporting period, information on a CSI transmission point, and information indicating whether CSI is wideband CSI or subband CSI. Step 2402 may be performed before step 2400 or may be integrated as one procedure.

In step 2404, the low-cost UE measure CSI for the low-cost subband according to the configuration information in steps 2400 and 2402.

In step 2406, the low-cost UE configures the measured CSI as CSI information and reports the CSI information to the base station.

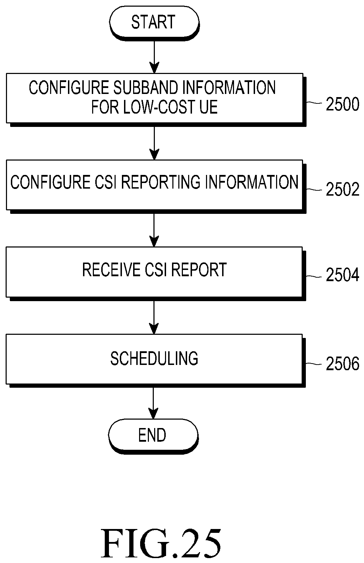

FIG. 25 illustrates a CSI reporting acquisition procedure of a base station according to the sixth embodiment of the present disclosure.

In step 2500, a base station notifies a low-cost UE of configuration information for low-cost subbands. The low-cost subband configuration information may include at least some of information on the locations of low-cost subbands, information on the number of low-cost subbands, and information indicating for which low-cost subband the low-cost UE should perform CSI reporting. The configuration information for low-cost subbands may be included in an MIB, may be included in an SIB for a low-cost UE, or may be included in RRC signaling for a low-cost UE.

In step 2502, the base station notifies the low-cost UE of CSI reporting-related information. The CSI reporting-related information may include at least some of information on a CSI reporting period, information on a CSI transmission point, and information indicating whether CSI is wideband CSI or subband CSI. Step 2502 may be performed before step 2500 or may be integrated as one procedure.

In step 2504, the base station receives a CSI report for the low-cost subband from the low-cost UE according to the configuration information in steps 2500 and 2502.

In step 2506, the base station performs scheduling for the low-cost UE by making reference to the received CSI report.

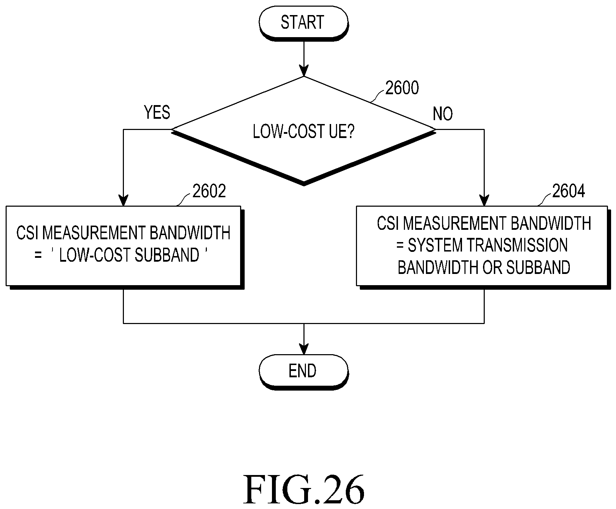

FIG. 26 illustrates a method of processing CSI reporting received by a base station in the sixth embodiment of the present disclosure.

As described in FIG. 25, a base station may receive a CSI report 2504 from a UE. The base station may identify the received CSI report according to the type of UE, that is, according to whether the UE is a low-cost UE or a normal LTE UE, and accordingly process the CSI report.

In step 2600, the base station checks whether the CSI report received from the UE is a report for a low-cost UE.

When the CSI report is a report for a low-cost UE, in step 2602, the base station may recognize that the measurement bandwidth in the CSI control information acquired from the CSI report low-cost UE corresponds to a low-cost subband and accordingly perform CSI processing.

When the CSI report is not a report for a low-cost UE (i.e., when the CSI report is a report for a normal LTE UE), in step 2604, the base station may recognize that the measurement bandwidth in the wideband CSI control information acquired from the CSI report corresponds to the system transmission bandwidth, recognize that the measurement bandwidth in the subband CSI control information acquired from the CSI report corresponds to a subband defined according to the system transmission bandwidth as shown in the example of Table 2, and accordingly perform CSI processing.

<Embodiment 7>

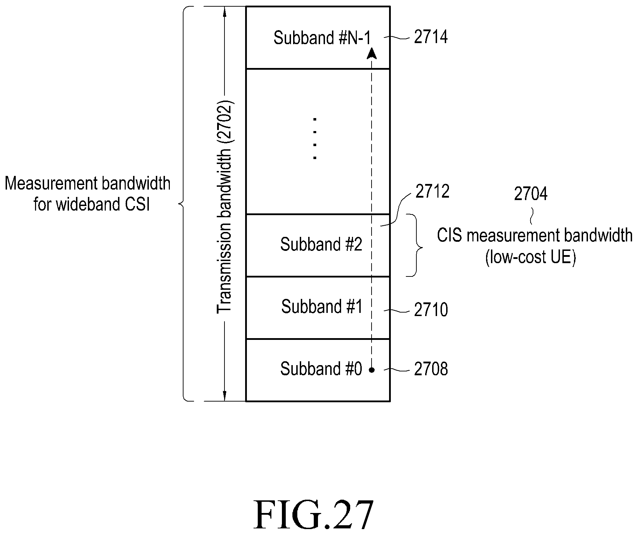

FIG. 27 is a conceptual view illustrating a CSI reporting method when a base station operates a subband where a low-cost UE operates within a system transmission bandwidth without explicitly configuring the subband according to a seventh embodiment of the present disclosure.

A seventh embodiment of the present disclosure is directed to a method for operating, for a low-cost UE that has a limitation on the maximum processable bandwidth, a subband where the low-cost UE operates within the system transmission bandwidth without explicitly configuring the subband for the low-cost UE.

Referring to FIG. 27, the system transmission bandwidth 2702 may include a total of N subbands from subband #0 to subband #N-1 2708, 2710, 2712, 2714. The size k of the subbands may be determined according to the system transmission bandwidth as shown in Table 2. The subband size k determined according to the system transmission bandwidth is equal to the size of a subband 2704 for which to measure CSI.

A low-cost UE may measures CSI for subband #0 2708 and report the CSI to a base station in subframe #0, may change the reception frequency of the UE to subband #1 2710, measure CSI for subband #1 2710, and report the CSI to the base station in subframe #1, may change the reception frequency of the UE to subband #2 2712, measure CSI for subband #2 2712, and report the CSI to the base station in subframe #2, and may change the reception frequency of the UE to subband #N-1 2714, measure CSI for subband #N-1 2714, and report the CSI to the base station in subframe #N-1.

Accordingly, the measurement bandwidth of CSI measured and reported by the low-cost UE at any moment is limited to the low-cost subband, but the base station may acquire a CSI report for the entire system transmission bandwidth 2702 by synthesizing CSI reports measured for low-cost subbands in different frequency regions over several time intervals. If necessary, the base station may assign all or some of subbands constituting the entire system transmission bandwidth 2702 and configure the low-cost UE.to perform CSI reporting for the assigned subbands.

Information on a CSI transmission point for each low-cost subband may be notified to the UE by the base station through signaling, or the UE may define a function relationship between the index of a low-cost subband and a CSI reporting transmission period and directly calculate information on a CSI transmission point for each low-cost subband using the defined function relationship.

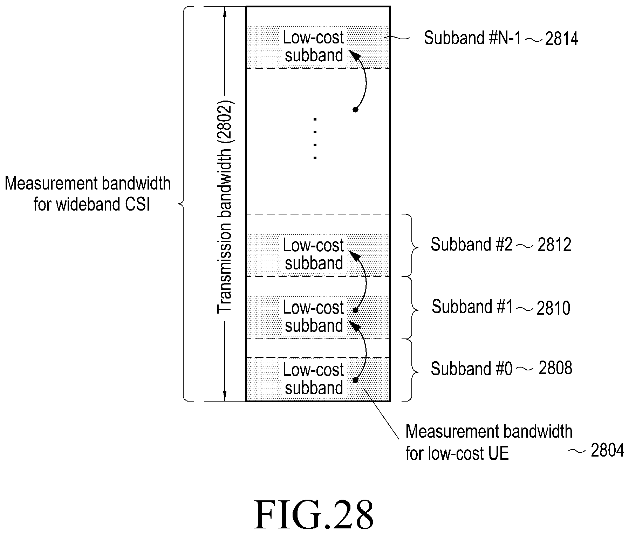

FIG. 28 is a view illustrating a case where, unlike the example of FIG. 27, a subband size k determined by a system transmission bandwidth is different from the size of a low-cost subband 2804.

In this case, the CSI measurement bandwidth of a low-cost UE may be determined by Equation 14 below.

<Equation 4>

CSI measurement bandwidth of low-cost UE = min {subband size (k), size of low-cost subband}

For example, if the size of a low-cost subband < a subband size k, then the CSI measurement bandwidth of a low-cost UE is determined as the low-cost subband by Equation 4. That is, as show in FIG. 28, a low-cost UE performs CSI measurement for a low-cost subband 2804 corresponding to a partial band in each subband 2808, 2810, 2812, 2814, and performs CSI reporting to a base station. The location of the partial band (i.e., low-cost subband) for which CSI measurement is performed in each subband may be determined by UE implementation, may be fixed to a low frequency region (bottom region) in each subband, or may be fixed to a high frequency region (top region) in each subband.

In the example of FIG. 28, the low-cost UE may measures CSI for a low-cost subband 2804 corresponding to a low frequency region in subband #0 2808 and report the CSI to the base station in subframe #0, may change the reception frequency of the UE to a low-cost subband corresponding to a low frequency region in subband #1 2810, measure CSI for the corresponding low-cost subband, and report the CSI to the base station in subframe #1, may change the reception frequency of the UE to a low-cost subband corresponding to a low frequency region in subband #2 2812, measure CSI for the corresponding low-cost subband, and report the CSI to the base station in subframe #2, and may change the reception frequency of the UE to a low-cost subband corresponding to a low frequency region in subband #N-1 2814, measure CSI for the corresponding low-cost subband, and report the CSI to the base station in subframe #N-1.

As described in FIG. 27, the base station may assign all or some of subbands constituting the entire system transmission bandwidth 2702 and configure the low-cost UE.to perform CSI reporting for the assigned subbands. Information on a CSI transmission point for each low-cost subband may be notified to the UE by the base station through signaling, or the UE may define a function relationship between the index of a low-cost subband and a CSI reporting transmission period and calculate information on a CSI transmission point for each low-cost subband using the defined function relationship.

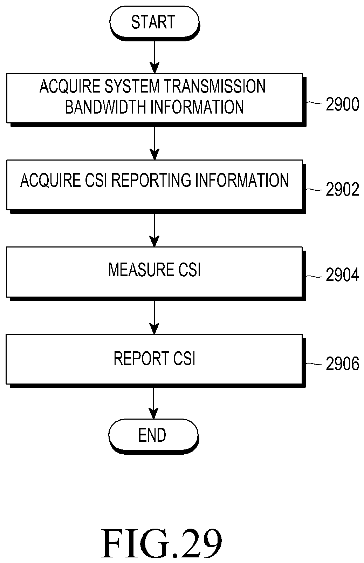

FIG. 29 illustrates a CSI reporting procedure of a low-cost UE according to the seventh embodiment of the present disclosure.

In step 2900, a low-cost UE acquires information on a DL system transmission bandwidth from a base station. The system transmission bandwidth information may be configured using an MIB, and may be transmitted to the UE through a PBCH. The low-cost UE acquires information on the sizes and the number of subbands constituting the system transmission bandwidth, etc. from the system transmission band width information.

In step 2902, the low-cost UE acquires CSI reporting-related information from the base station. The CSI reporting-related information may include at least some of information on a CSI reporting period, information on a CSI transmission point, and information indicating whether CSI is wideband CSI or subband CSI.

In step 2904, the low-cost UE performs CSI measurement according to the configuration information in steps 2900 and 2902.

In step 2906, the low-cost UE configures the measured CSI as CSI information and reports the CSI information to the base station.

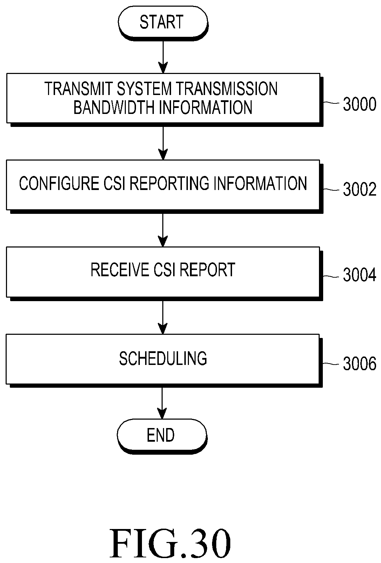

FIG. 30 illustrates a CSI reporting acquisition procedure of a base station according to the seventh embodiment of the present disclosure.

In step 3000, a base station transmits information on a system transmission bandwidth to a low-cost UE through a PBCH. The system transmission bandwidth information may be configured and transmitted using an MIB.

In step 3002, the base station notifies the low-cost UE of CSI reporting-related information. The CSI reporting-related information may include at least some of information on a CSI reporting period, information on a CSI transmission point, and information indicating whether CSI is wideband CSI or subband CSI.

In step 3004, the base station receives a CSI report from the low-cost UE according to the configuration information in steps 3000 and 3002.

In step 3006, the base station performs scheduling for the low-cost UE by making reference to the received CSI report.

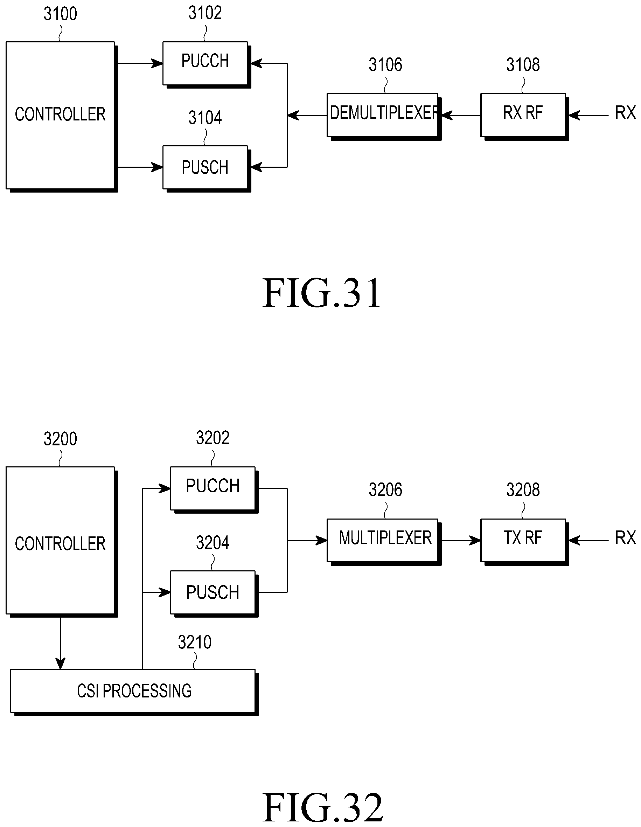

FIG. 31 illustrates a configuration of a base station apparatus according to some embodiments of the present disclosure.

As an example, the base station apparatus of FIG. 31 may perform the sixth and seventh embodiments of the present disclosure.

Referring to FIG. 31, the base station may include a receiver and a controller 3100. The receiver may include at least one of a PUCCH block 3102, a PUSCH block 3104, a demultiplexer 3106, and a reception RF block 3108. The controller 3100 may control each element block of the receiver according to any one of the above described embodiments (sixth and seventh embodiments) such that the base station can receive CSI transmitted by a UE. The controller 3100 may also transmit at least one of subband configuration information for a low-cost UE, system transmission bandwidth information, and CSI report configuration information to a UE through a transmitter. The receiver may perform signalprocessing of a received signal in the reception RF block 3108, separate a PUCCH signal or a PUSCH signal from the received signal through the demultiplexer 3106, and then acquire CSI through the PUCCH block 3102 or the PUSCH block 3104.

FIG. 32 illustrates a configuration of a UE apparatus according to some embodiments of the present disclosure.

As an example, the UE apparatus of FIG. 32 may perform the sixth and seventh embodiments of the present disclosure.

Referring to FIG. 32, the UE may include a transmitter and a controller 3200. The transmitter may include at least one of a PUCCH block 3202, a PUSCH block 3204, a multiplexer 3206, and a transmission RF block 3208. The UE may futher include a CSI processing block 3210. The controller 3200 may control the CSI processing block 3210 to measure CSI according to the specific CSI reporting methods for a low-cost UE described in the above embodiments by making reference to control information received from a base station. The CSI processing block 3210 measures and configures CSI under the control of the controller 3200, and inputs the CSI into the PUCCH block 3202 or the PUSCH block 3204 at the time corresponding to a CSI transmission point. In the case of aperiodic CSI reporting, the CSI processing block 3210 inputs generated CSI into the PUSCH block 3204. In the case of periodic CSI reporting, the CSI processing block 3210 may input generated CSI into the PUSCH block 3204 when there is a PUSCH transmission and input generated CSI into the PUCCH block 3202 when there is no PUSCH transmission. The PUSCH block 3204 generate a PUSCH by performing processes such as channel coding and modulation for uplink data and UCI. The PUCCH block 3202 generates a PUCCH by performing processes such as channel coding and modulation for UCI. The UE multiplexes the generated PUSCH or PUCCH with other uplink signals in the multiplexer 3206, performs signal processing thereof in the transmission RF block 3208, and then transmits the signal to a base station.

It will be understood that all the operations of a base station or a UE as described above in the first to seventh embodiments are performed under the control of a control in the corresponding apparatus. However, it will be apparent that a controller and a transmitter or a controller and a receiver should not be necessarily implemented as separate units, but may be implemented as one constituent unit, for example, in the form of a single chip.

It should be noted that the apparatus configuration diagrams, the method illustration flowcharts, the conceptual views, and the like illustrated in FIGS. 2 to 32 are not intended to limit the scope of protection of the present disclosure. That is, it should not be construed that all the constituent units or operation steps shown in FIGS. 2 and 32 are essential elements for implementing the present disclosure, and it should be understood that the present disclosure can be implements by only some elements without departing from the basic scope of the present disclosure.

The above described operations may be implemented by providing a memory device storing corresponding program codes in any constituent unit of a base station or UE apparatus in a communication system. That is, a controller of the base station or UE apparatus may perform the above described operations by reading and executing the program codes stored in the memory device through a processor or a central processing unit (CPU).

The various elements, modules, and the like of the base station or UE apparatus as described herein may be operated using a hardware circuit, for example, a complementary metal oxide semiconductor based logical circuit, firmware, software, and/or a combination of hardware and firmware and/or software inserted into a machine-readable medium. As an example, various electric configurations and methods may be carried out using electrical circuits such as transistors, logic gates, and application specific integrated circuits (ASICs).

Although particular embodiments have been described in the detailed description of the present disclosure, it will be apparent that various modifications and changes may be made without departing from the scope of the present disclosure. Therefore, the scope of the present disclosure should not be limited to the aforementioned embodiments, but should be defined by the appended claims and equivalents thereto.

## Claims

1. A method for transmitting a random access preamble by a user equipment (UE) performing initial access in a communication system, the method comprising:

   acquiring system information from a base station;
   determining a repetition level of a random access preamble using the acquired system information; and
   repeatedly transmitting the random access preamble a number of times corresponding to the determined repetition level in a transmission resource region corresponding to the repetition level.

2. The method of claim 1, further comprising:

   receiving a reference signal; and
   measuring reference signal received power (RSRP) of the received reference signal,
   wherein the repetition level of the random access preamble is determined by comparing the measured RSRP with the system information.

3. The method of claim 1, further comprising performing synchronization by receiving as many downlink synchronization signals as the accumulated number of receptions,
   wherein the repetition level of the random access preamble is determined by comparing the accumulated number of receptions with the system information.

4. The method of claim 1, further comprising acquiring a master information block (MIB) by receiving as many physical broadcast channels (PBCHs) as the accumulated number of receptions,
   wherein the repetition level of the random access preamble is determined by comparing the accumulated number of receptions with the system information.

5. The method of claim 1, wherein the system information is acquired by receiving as many physical downlink control channels (PDCCHs) and physical downlink shared channels (PDSHs) as the accumulated number of receptions,
   wherein the repetition level of the random access preamble is determined by comparing the accumulated number of receptions with the system information.

6. The method of claim 1, further comprising calculating transmission power required to detect the random access preamble by the base station and maximum transmission power allowed for the UE,
   wherein the repetition level of the random access preamble is determined by comparing a difference between the required transmission power and the maximum transmission power with the system information.

7. The method of claim 1, further comprising:

determining a repetition level of a downlink random access response (RAR);
determining a random access preamble sequence group on the basis of the determined repetition level of the RAR; and
determining a random access preamble sequence in the determined sequence group,
wherein the random access preamble is generated using the random access preamble sequence.

8. The method of claim 7, further comprising receiving an RAR on the basis of the determined repetition level of the RAR.

9. The method of claim 1, further comprising:

receiving an RAR;
extracting a transmission power control (TPC) field included in the RAR; determining an msg3 repetition level from the extracted TPC field; and
repeatedly transmitting msg3 on the basis of the determined mas3 repetition level.

10. A user equipment (UE) apparatus for performing initial access in a communication system, the UE apparatus comprising:

a transceiver unit for acquiring system information from a base station; and
a control unit for determining a repetition level of a random access preamble using the acquired system information, and repeatedly transmitting the random access preamble a number of times corresponding to the determined repetition level in a transmission resource region corresponding to the repetition level.

11. A method for performing downlink data communication by a user equipment (UE) operating in a long term evolution (LTE) cell within a licensed band and in a license assisted access (LAA) cell within an unlicensed band, the method comprising:

receiving configuration information for the LTE cell and the LAA cell;
checking whether subframe #n of the LAA cell falls within an idle time, using the configuration information;
when subframe #n of the LAA cell falls within the idle time, receiving a control channel for downlink data scheduling and downlink data in subframe #n of the LTE cell; and
transmitting hybrid automatic repeat request-acknowledgement (HARQ-ACK) in a subframe after a certain number of subframes from subframe #n of the LTE cell.

12. The method of claim 11, wherein the LAA cell is scheduled by the LTE cell, and the control channel for downlink data scheduling is transmitted through a UE specific search space that is identified by a serving cell index of the LAA cell or a carrier indicator field (CIF).

13. The method of claim 11, wherein the LAA cell is scheduled by the LTE cell, and a search space for the control channel for downlink data scheduling and a search space for a control channel for downlink data scheduling in the LTE cell are identified by a carrier indicator field (CIF) value.

14. A method for performing downlink data communication by a base station operating in a long term evolution (LTE) cell within a licensed band and in a license assisted access (LAA) cell within an unlicensed band, the method comprising:

transmitting configuration information for the LTE cell and the LAA cell;
checking whether subframe #n of the LAA cell falls within an idle time, using the configuration information;
when subframe #n of the LAA cell falls within the idle time, transmitting a control channel for downlink data scheduling and downlink data in subframe #n of the LTE cell; and
receiving hybrid automatic repeat request-acknowledgement (HARQ-ACK) in a subframe after a certain number of subframes from subframe #n of the LTE cell.

15. A user equipment (UE) apparatus operating in a long term evolution (LTE) cell within a licensed band and in a license assisted access (LAA) cell within an unlicensed band, the UE apparatus comprising:

a transceiver unit for receiving configuration information for the LTE cell and the LAA cell; and
a control unit for checking whether subframe #n of the LAA cell falls within an idle time, using the configuration information, receiving a control channel for downlink data scheduling and downlink data in subframe #n of the LTE cell when subframe #n of the LAA cell falls within the idle time, and transmitting hybrid automatic repeat request-acknowledgement (HARQ-ACK) in a subframe after a certain number of subframes from subframe #n of the LTE cell.

16. A base station apparatus operating in a long term evolution (LTE) cell within a licensed band and in a license assisted access (LAA) cell within an unlicensed band, the base station apparatus comprising:

a transceiver unit for transmitting configuration information for the LTE cell and the LAA cell; and
a control unit for checking whether subframe #n of the LAA cell falls within an idle time, using the configuration information, transmitting a control channel for downlink data scheduling and downlink data in subframe #n of the LTE cell when subframe #n of the LAA cell falls within the idle time, and receiving hybrid automatic repeat request-acknowledgement (HARQ-ACK) in a subframe after a certain number of subframes from subframe #n of the LTE cell.

17. A method for reporting channel state information (CSI) by a low-cost user equipment (UE) that operates at least one subband constituting a system transmission bandwidth, the method comprising:

receiving configuration information for subbands;
receiving information related to CSI reporting;
measuring CSI of at least one subband indicated by the configuration information for subbands, on the basis of the information related to CSI reporting; and
reporting the measured CSI of the at least one subband.

18. The method of claim 17, wherein the configuration information for subbands includes at least one of information indicating the location of the at least one subband, information indicating the number of the at least one subband, and information indicating for which subband the UE should perform CSI reporting.

19. The method of claim 17, wherein the information related to CSI reporting includes at least one of information indicating a CSI reporting period, information indicating a CSI reporting point, and information indicating whether the CSI is wideband CSI or subband CSI.

20. A method for receiving a channel state information (CSI) by a base station that supports at least one subband constituting a system transmission bandwidth, the method comprising:

transmitting configuration information for subbands;
transmitting information related to CSI reporting;
receiving CSI of at least one subband indicated by the configuration information for subbands from a user equipment (UE), on the basis of the information related to CSI reporting; and
scheduling the UE using the received CSI.

21. The method of claim 20, further comprising:

checking whether the received CSI is CSI of a low-cost UE; and
when the received CSI is CSI of a low-cost UE, recognizing a measurement bandwidth of the CSI as a subband where the low-cost UE operates.

22. A user equipment (UE) apparatus operating in at least one subband constituting a system transmission bandwidth, the UE apparatus comprising:

a transceiver unit for receiving configuration for subbands and receiving information related to channel state information (CSI) reporting; and
a control unit for measuring CSI of at least one subband indicated by the configuration information for subbands, on the basis of the information related to CSI reporting, and reporting the measured CSI of the at least one subband.

23. A base station apparatus that supports at least one subband constituting a system transmission bandwidth, the base station apparatus comprising:

a transceiver unit for transmitting configuration for subbands and transmitting information related to channel state information (CSI) reporting; and
a control unit for receiving CSI of at least one subband indicated by the configuration information for subbands from a user equipment (UE), on the basis of the information related to CSI reporting, and scheduling the UE using the received CSI.

Radio frame (114)

Subframe (105)

. . . .

Slot (106)

$N_{BW}$ subcarriers (104)

$N_{RB}$ subcarriers (110)

Resource element (112)

Resource block (108)

Nsymb OFDM symbols (102)

# FIG.1

200 UE

201 eNodeB

System information for Random access — 202

Random access preamble transmission — 203

Random access response — 204

L2/L3 message — 205

Contention resolution — 206

FIG.2

START

RECEIVE SYSTEM INFORMATION FROM BASE STATION — 300

MEASURE RSRP — 301

COMPARE MEASURED RSRP VALUE WITH COVERAGE
ENHANCEMENT MODE PARAMETER — 302

DETERMINE COVERAGE ENHANCEMENT MODE AND
PREAMBLE REPETITION LEVEL — 303

TRANSMIT RANDOM ACCESS PREAMBLE — 304

END

FIG.3

START

DOWNLINK SYNCHRONIZATION AND CELL SEARCH — 400

ACQUIRE SYSTEM INFORMATION
FROM BASE STATION — 401

COMPARE NUMBER OF PSSS/
SSSS USED FOR SYNCHRONIZATION WITH
THRESHOLDS CONFIGURED BY BASE STATION — 402

DETERMINE COVERAGE ENHANCEMENT MODE
AND PREAMBLE REPETITION LEVEL — 403

TRANSMIT RANDOM ACCESS PREAMBLE — 404

END

FIG.4

```
                    ┌─────────────┐
                    │    START    │
                    └──────┬──────┘
                           │
                           ▼
              ┌────────────────────────┐
              │      RECEIVE PBCH       │──── 500
              └────────────┬───────────┘
                           │
                           ▼
                     ╱─────────────╲          501
                    ╱   MIB IS       ╲───────  YES ──────────┐
                    ╲   ACQUIRED?    ╱                        │
                     ╲──────┬──────╱                          │
                            │ NO                              │
                            ▼                                 │
              ┌──────────────────────────────┐               │
              │  RECEIVE ADDITIONALLY         │──── 503       │
              │  REPEATED PBCH                │               │
              └──────────────┬───────────────┘               │
                             │                                │
                             ▼                                │
              ┌──────────────────────────────┐               │
              │  DETECT MINIMUM REPETITION    │──── 504       │
              │  LEVEL FOR MIB ACQUISITION    │               │
              └──────────────┬───────────────┘               │
                             │                                │
                             ▼                                │
              ┌──────────────────────────────┐               │
              │  ACQUIRE SYSTEM INFORMATION   │──── 505       │
              │  THROUGH MIB                  │               │
              └──────────────┬───────────────┘               │
                             │                                │
                             ▼                                │
              ┌──────────────────────────────┐               │
              │  DETERMINE COVERAGE ENHANCEMENT│─── 506       │
              │  MODE AND PREAMBLE REPETITION  │              │
              │  LEVEL                         │              │
              └──────────────┬───────────────┘               │
                             │                                ▼
              ┌──────────────────────────────┐   ┌──────────────────────────┐
              │  TRANSMIT RANDOM ACCESS       │   │  TRANSMIT CONVENTIONAL    │─── 502
              │  PREAMBLE FOR COVERAGE        │   │  RANDOM ACCESS PREAMBLE   │
              │  ENHANCEMENT           ── 507 │   └────────────┬─────────────┘
              └──────────────┬───────────────┘                │
                             │◄───────────────────────────────┘
                             ▼
                    ┌─────────────┐
                    │     END     │
                    └─────────────┘
```

# FIG.5

START

DETERMINE COVERAGE ENHANCEMENT MODE — 600

RECEIVE PDCCH/PDSCH FOR SIB RECEPTION — 601

DETERMINE MINIMUM RECEIVABLE
REPETITION LEVEL OF PDCCH/PDSCH — 602

DETERMINE PREAMBLE REPETITION LEVEL — 603

TRANSMIT RANDOM ACCESS PREAMBLE — 604

END

FIG.6

FIG.7

START

ACQUIRE SYSTEM INFORMATION
FROM BASE STATION — 800

CALCULATE RANDOM ACCESS
PREAMBLE TRANSMISSION POWER — 801

CALCULATE $X_{Remained}$ — 802

COMPARE $X_{Remained}$ WITH THRESHOLD
AND DETERMINE REPETITION
LEVEL OF RANDOM ACCESS PREAMBLE — 803

TRANSMIT RANDOM ACCESS PREAMBLE — 804

END

# FIG.8

START

DETERMINE REPETITION LEVEL OF UPLINK RANDOM ACCESS PREAMBLE — 900

DETERMINE REPETITION LEVEL OF DOWNLINK RAR — 901

DETERMINE PREAMBLE SEQUENCE GROUP AND SEQUENCE — 902

TRANSMIT RANDOM ACCESS PREAMBLE — 903

RECEIVE RAR — 904

END

FIG.9

START

TRANSMIT RANDOM ACCESS PREAMBLE
FOR COVERAGE ENHANCEMENT — 1000

RECEIVE RAR — 1001

EXTRACT POWER CONTROL
COMMAND FIELD — 1002

1003
COVERAGE ENHANCEMENT
MODE INDICATOR == 1?

YES

NO

DETERMINE REPETITION LEVEL OF PUSCH
IN COVERAGE ENHANCEMENT MODE
BY REMAINING 2 BITS OF POWER
CONTROL COMMAND — 1004

OPERATE IN NORMAL MODE,
USE REMAINING 2 BITS OF
POWER CONTROL COMMAND
FOR PUSCH POWER CONTROL — 1005

END

FIG.10

1101

1102

1108

DOWNLINK
RECEIVER

DOWNLINK
SYNCHRONIZER AND
CELL SEARCHER

1106

1107

DUPLEXER

RF

1103

1104

CONTROLLER

RANDOM
ACCESS PREAMBLE
TRANSMITTER

1105

UPLINK
TRANSMITTER

## FIG.11

1201

1206

1207

DOWNLINK
TRANSMITTER

TRANSMISSION
RF

1204

1202

CONTROLLER

RANDOM
ACCESS PREAMBLE
DETECTOR

1207

1205

RECEPTION
RF

1203

UPLINK
RECEIVER

## FIG.12

1302     1301

LTE CELL

LAA CELL

1303

1304

# FIG.13A

1313

X2 interface

1311

LAA     LTE

1312

# FIG.13B

FIG.14

FIG.15

START

TRANSMIT CONFIGURATION INFORMATION
FOR LTE CELL AND LAA CELL ─ 1601

1602
LAA CELL IS IDLE TIME IN
SUBFRAME N?

YES                    NO

1603
TRANSMIT CONTROL CHANNEL FOR
SCHEDULING DOWNLINK DATA OF
LAA CELL IN SUBFRAME N
OF LTE CELL

1606
TRANSMIT CONTROL CHANNEL FOR
SCHEDULING DOWNLINK DATA OF
LAA CELL IN SUBFRAME
N OF LAA CELL

1604
TRANSMIT DOWNLINK DATA OF LAA
CELL IN SUBFRAME N OF LTE CELL

1607
TRANSMIT DOWNLINK DATA OF LAA
CELL IN SUBFRAME N OF LAA CELL

1605
RECEIVE HARA-ACK IN SUBFRAME
N+4 OF LTE CELL

1608
RECEIVE HARA-ACK IN SUBFRAME
N+4 OF LTE CELL

END

# FIG.16A

START

RECEIVE CONFIGURATION INFORMATION
FOR LTE CELL AND LAA CELL —1611

1612

YES ← LAA CELL IS IDLE TIME IN
SUBFRAME N? → NO

1613

RECEIVE CONTROL CHANNEL FOR
SCHEDULING DOWNLINK DATA OF
LAA CELL IN SUBFRAME
N OF LTE CELL

1614

RECEIVE DOWNLINK DATA OF LAA
CELL IN SUBFRAME N OF LTE CELL

1615

TRANSMIT HARA-ACK IN SUBFRAME
N+4 OF LTE CELL

1616

RECEIVE CONTROL CHANNEL FOR
SCHEDULING DOWNLINK DATA OF
LAA CELL IN SUBFRAME
N OF LAA CELL

1617

RECEIVE DOWNLINK DATA OF LAA
CELL IN SUBFRAME N OF LAA CELL

1618

TRANSMIT HARA-ACK IN SUBFRAME
N+4 OF LTE CELL

END

FIG.16B

FIG.17

START

TRANSMIT CONFIGURATION INFORMATION
FOR LTE CELL AND LAA CELL — 1801

1802

YES ← LAA CELL IS IDLE TIME IN
SUBFRAME N? → NO

1803

TRANSMIT CONTROL CHANNEL
FOR SCHEDULING DOWNLINK
DATA OF LAA CELL IN
SUBFRAME N OF LTE CELL

1804

TRANSMIT DOWNLINK DATA OF LAA
CELL IN SUBFRAME N OF LTE CELL

1805

RECEIVE HARA-ACK IN SUBFRAME
N+4 OF LTE CELL

1806

TRANSMIT CONTROL CHANNEL
FOR SCHEDULING DOWNLINK
DATA OF LAA CELL IN
SUBFRAME N OF LTE CELL

1807

TRANSMIT DOWNLINK DATA OF LAA
CELL IN SUBFRAME N OF LAA CELL

1808

RECEIVE HARA-ACK IN SUBFRAME
N+4 OF LTE CELL

END

FIG.18A

START

RECEIVE CONFIGURATION INFORMATION
FOR LTE CELL AND LAA CELL ⟶ 1811

1812

YES ◄ LAA CELL IS IDLE TIME IN
SUBFRAME N? ► NO

1813

RECEIVE CONTROL CHANNEL FOR
SCHEDULING DOWNLINK DATA OF
LAA CELL IN SUBFRAME
N OF LTE CELL

1814

RECEIVE DOWNLINK DATA OF LAA
CELL IN SUBFRAME N OF LTE CELL

1815

TRANSMIT HARA-ACK IN SUBFRAME
N+4 OF LTE CELL

1816

RECEIVE CONTROL CHANNEL FOR
SCHEDULING DOWNLINK DATA OF
LAA CELL IN SUBFRAME
N OF LTE CELL

1817

RECEIVE DOWNLINK DATA OF LAA
CELL IN SUBFRAME N OF LAA CELL

1818

TRANSMIT HARA-ACK IN SUBFRAME
N+4 OF LTE CELL

END

# FIG.18B

**FIG.19**

EP 3 249 993 A1

FIG.20

FIG.21

2206
Measurement bandwidth
for wideband CSI
(normal LTE UE)

Transmission bandwidth (2202)

2208

Low-cost subband

2204
CSI measurement bandwidth
(low-cost UE)

FIG.22

FIG.23

START

ACQUIRE SUBBAND INFORMATION
FOR LOW-COST UE — 2400

ACQUIRE CSI REPORTING INFORMATION — 2402

MEASURE CSI — 2404

REPORT CSI — 2406

END

FIG.24

START

CONFIGURE SUBBAND INFORMATION
FOR LOW-COST UE — 2500

CONFIGURE CSI REPORTING INFORMATION — 2502

RECEIVE CSI REPORT — 2504

SCHEDULING — 2506

END

FIG.25

START

2600

YES ◄——— LOW-COST UE? ———► NO

2602

CSI MEASUREMENT BANDWIDTH
= ' LOW-COST SUBBAND '

2604

CSI MEASUREMENT BANDWIDTH
= SYSTEM TRANSMISSION
BANDWIDTH OR SUBBAND

END

FIG.26

FIG.27

FIG.28

```
                          ┌──────────┐
                          │  START   │
                          └────┬─────┘
                               │
                               ▼
        ┌─────────────────────────────────────┐
        │   ACQUIRE SYSTEM TRANSMISSION        │───  2900
        │      BANDWIDTH INFORMATION           │
        └─────────────────┬───────────────────┘
                          │
                          ▼
        ┌─────────────────────────────────────┐
        │    ACQUIRE CSI REPORTING INFORMATION │───  2902
        └─────────────────┬───────────────────┘
                          │
                          ▼
        ┌─────────────────────────────────────┐
        │             MEASURE CSI              │───  2904
        └─────────────────┬───────────────────┘
                          │
                          ▼
        ┌─────────────────────────────────────┐
        │             REPORT CSI               │───  2906
        └─────────────────┬───────────────────┘
                          │
                          ▼
                    ┌──────────┐
                    │   END    │
                    └──────────┘
```

# FIG.29

```
        ┌─────────┐
        │  START  │
        └─────────┘
             │
             ▼
   ┌──────────────────────────┐
   │ TRANSMIT SYSTEM          │
   │ TRANSMISSION             │ ── 3000
   │ BANDWIDTH INFORMATION    │
   └──────────────────────────┘
             │
             ▼
   ┌──────────────────────────┐
   │ CONFIGURE CSI REPORTING  │ ── 3002
   │ INFORMATION              │
   └──────────────────────────┘
             │
             ▼
   ┌──────────────────────────┐
   │ RECEIVE CSI REPORT       │ ── 3004
   └──────────────────────────┘
             │
             ▼
   ┌──────────────────────────┐
   │ SCHEDULING               │ ── 3006
   └──────────────────────────┘
             │
             ▼
        ┌─────────┐
        │   END   │
        └─────────┘
```

# FIG.30

3100      3102

CONTROLLER

PUCCH

3104

PUSCH

3106      3108

DEMULTIPLEXER

RX RF

RX

# FIG.31

3200      3202

CONTROLLER

PUCCH

3204

PUSCH

3206      3208

MULTIPLEXER

TX RF

RX

3210

CSI PROCESSING

# FIG.32

## INTERNATIONAL SEARCH REPORT

| International application No. |
| --- |
| **PCT/KR2016/000776** |

### A. CLASSIFICATION OF SUBJECT MATTER

*H04W 74/00(2009.01)i, H04W 74/08(2009.01)i, H04W 48/08(2009.01)i, H04W 72/12(2009.01)i, H04L 5/00(2006.01)i*

According to International Patent Classification (IPC) or to both national classification and IPC

### B. FIELDS SEARCHED

Minimum documentation searched (classification system followed by classification symbols)
H04W 74/00; H04B 7/26; H04W 74/08; H04J 11/00; H04W 72/04; H04W 72/10; H04W 48/08; H04W 72/12; H04L 5/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: random access, preamble, system information, repetition, level, collection

### C. DOCUMENTS CONSIDERED TO BE RELEVANT

| Category* | Citation of document, with indication, where appropriate, of the relevant passages | Relevant to claim No. |
| --- | --- | --- |
| X | WO 2014-069944 A1 (LG ELECTRONICS INC.) 08 May 2014<br>See paragraph [243]; and claims 1, 5. | 1-4,10 |
| A | | 5-9 |
| A | KR 10-2012-0041932 A (ELECTRONICS AND TELECOMMUNICATIONS RESEARCH INSTITUTE) 03 May 2012<br>See paragraphs [0025]-[0036]; and figure 2. | 1-10 |
| A | KR 10-2012-0030549 A (QUALCOMM INCORPORATED) 28 March 2012<br>See paragraphs [0047]-[0048]; and figure 4. | 1-10 |
| A | US 2011-0310769 A1 (LEE, Anthony) 22 December 2011<br>See paragraph [0024]; and figure 4. | 1-10 |
| A | WO 2011-162565 A2 (LG ELECTRONICS INC.) 29 December 2011<br>See paragraphs [108]-[133]; and figure 7. | 1-10 |

☐ Further documents are listed in the continuation of Box C.     ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>18 MAY 2016 (18.05.2016) | Date of mailing of the international search report<br><br>**18 MAY 2016 (18.05.2016)** |
| Name and mailing address of the ISA/KR<br>Korean Intellectual Property Office<br>Government Complex-Daejeon, 189 Seonsa-ro, Daejeon 302-701, Republic of Korea<br>Facsimile No. 82-42-472-7140 | Authorized officer<br><br><br>Telephone No. |

Form PCT/ISA/210 (second sheet) (January 2015)

## INTERNATIONAL SEARCH REPORT

| International application No. |
|---|
| **PCT/KR2016/000776** |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

Claims 1-10 pertain to a random access preamble transmission method by which a terminal performs an initial access in a communication system.
Claims 11-16 pertain to a downlink data communication method by which a terminal is operated in a licensed spectrum LTE cell and an unlicensed spectrum LAA cell.
Claims 17-23 pertain to a CSI report method by which low cost terminal is operated in at least one sub-band forming a system transmission bandwidth.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:
Claims 1-10

| **Remark on Protest** | ☐ | The additional search fees were accompanied by the applicant's protest and, where applicable, the payment of a protest fee. |
|---|---|---|
| | ☐ | The additional search fees were accompanied by the applicant's protest but the applicable protest fee was not paid within the time limit specified in the invitation. |
| | ☐ | No protest accompanied the payment of additional search fees. |

Form PCT/ISA/210 (continuation of first sheet (2)) (January 2015)

INTERNATIONAL SEARCH REPORT
Information on patent family members

International application No.

**PCT/KR2016/000776**

| Patent document cited in search report | Publication date | Patent family member | Publication date |
|---|---|---|---|
| WO 2014-069944 A1 | 08/05/2014 | CN 104823390 A | 05/08/2015 |
| | | CN 104937866 A | 23/09/2015 |
| | | US 2015-0296518 A1 | 15/10/2015 |
| | | US 2015-0304080 A1 | 22/10/2015 |
| | | WO 2014-069945 A1 | 08/05/2014 |
| KR 10-2012-0041932 A | 03/05/2012 | US 2012-0099543 A1 | 26/04/2012 |
| KR 10-2012-0030549 A | 28/03/2012 | CN 102498746 A | 13/06/2012 |
| | | CN 102498746 B | 08/07/2015 |
| | | CN 104955164 A | 30/09/2015 |
| | | EP 2443896 A2 | 25/04/2012 |
| | | JP 2012-530475 A | 29/11/2012 |
| | | JP 5373196 B2 | 18/12/2013 |
| | | US 2011-0243075 A1 | 06/10/2011 |
| | | WO 2010-148132 A2 | 23/12/2010 |
| | | WO 2010-148132 A3 | 23/12/2010 |
| US 2011-0310769 A1 | 22/12/2011 | CN 102223412 A | 19/10/2011 |
| | | CN 102223412 B | 25/06/2014 |
| | | US 8737265 B2 | 27/05/2014 |
| WO 2011-162565 A2 | 29/12/2011 | US 2013-0089061 A1 | 11/04/2013 |
| | | US 9042326 B2 | 26/05/2015 |
| | | WO 2011-162565 A3 | 03/05/2012 |

Form PCT/ISA/210 (patent family annex) (January 2015)